# EUROPÄISCHE PATENTSCHRIFT

(11) **EP 3 662 735 B1**
(45) Veröffentlichungstag und Bekanntmachung des Hinweises auf die Patenterteilung: **28.02.2024**
(21) Anmeldenummer: 19211736.4
(22) Anmeldetag: 27.11.2019
(51) Int. Cl.: A01C 15/04, A01C 21/00

(54) **VERTEILMASCHINE ZUM AUSBRINGEN VON KÖRNIGEM LANDWIRTSCHAFTLICHEN STREUGUT UND VERFAHREN ZUR VERTEILUNG VON KÖRNIGEM LANDWIRTSCHAFTLICHEN STREUGUT**
DISTRIBUTION MACHINE FOR SPREADING GRANULAR AGRICULTURAL SPREADING MATERIAL AND METHOD FOR DISTRIBUTING GRANULAR AGRICULTURAL SPREADING MATERIAL
MACHINE DE DISTRIBUTION POUR ÉPANDER UN MATÉRIAU D'ÉPANDAGE AGRICOLE GRANULAIRE ET PROCÉDÉ POUR DISTRIBUER UN MATÉRIAU D'ÉPANDAGE AGRICOLE GRANULAIRE

(30) Priorität: 05.12.2018 DE 102018131070
(43) Veröffentlichungstag der Anmeldung: 10.06.2020
(73) Patentinhaber: HORSCH LEEB Application Systems GmbH, 94405 Landau an der Isar (DE)
(72) Erfinder: LEEB, Theodor, 94562 Oberpöring (DE)
(74) Vertreter: Benninger, Johannes

(56) Entgegenhaltungen:
- DE-A1-102017 005 093
- US-A- 5 125 583
- US-A- 5 178 333
- US-A1- 2016 095 276

## Beschreibung

Die Erfindung betrifft eine Verteilmaschine, insbesondere einen pneumatischen Düngerstreuer, zum Ausbringen von körnigem landwirtschaftlichem Streugut. Die Erfindung betrifft zudem ein Verfahren zur Verteilung von körnigem landwirtschaftlichem Streugut.

Zur großflächigen Verteilung von körnigem bzw. granularem landwirtschaftlichen Streugut, insbesondere zur Verteilung von landwirtschaftlichem Dünger, sind aus dem Stand der Technik im Wesentlichen zwei unterschiedliche Arten von als Düngerstreuer bezeichneten landwirtschaftlichen Verteilmaschinen bekannt.

Eine erste Ausführungsvariante stellen hierbei sog. Scheibenstreuer bzw. Zentrifugalstreuer dar, bei welchen die Verteilung des Streuguts mittels eines scheibenförmigen Schleuderwerks erfolgt. Beim Schleuderwerk handelt es sich in der Regel um waagerecht oder leicht geneigt mit bspw. 700min-1 bis 1000min-1 rotierende Scheiben, auf welche Scheiben jeweils, dass in einer variablen Menge durch eine Auslassöffnung eines Vorratsbehälters fließende Streugut fällt und von auf den Scheiben angebrachten Wurfleisten beschleunigt und fortgeschleudert wird. Die Variation der Menge an Streugut erfolgt hierbei durch ein Vergrößern oder Verkleinern der Auslassöffnung des Vorratsbehälters. Das durch die Rotation der Scheiben entstehende Wurfbild entspricht in der Regel einem Kreisringsektor. Derartige Verteilmaschinen besitzen zumeist einen einfachen und somit kostengünstigen Aufbau. Aufgrund der entstehenden Kreisringsektoren sind jedoch mit derartigen Düngerstreuer teilflächenspezifische Anwendungen (z. B. Section-Control-Anwendungen) nur begrenzt möglich. Zudem müssen zur Definition einer gewünschten Arbeitsbreite, d.h. zur Erreichung von gewünschten Kreisringsektoren für die zu verteilenden Streugüter durch aufwendige Versuchsreihen jeweils die optimalen Drehzahlen der Scheiben definiert werden. Des Weiteren können derartige Düngerstreuer bei starken Winden nicht eingesetzt werden, da durch die Winde das Wurfbild, d.h. die erzeugten Kreisringsektoren negativ beeinflusst werden.

Um diesen Problemen entgegenzuwirken, wurde als zweite Ausführungsvariante der sog. Pneumatikstreuer bzw. Exaktstreuer entwickelt. Hierbei wird das Streugut aus einem Vorratsbehälter, mittels den Vorratsbehältern räumlich zugeordneten Dosiervorrichtungen, in einen Luftstrom dosiert und mittels dieses Luftstroms vom Vorratstank über eine Vielzahl von Rohrleitungen zu einer entsprechenden Anzahl von an einem Verteilgestänge angebrachten Verteilleitungen gefördert. An den Verteilleitungen sind in der Regel sog. Prallteller angebracht, gegen welche das Streugut mittels des Luftstroms gefördert und anschließend mittels somit erzeugter Streufächer ganzflächig verteilt wird. Insbesondere ist bei einer derartigen Ausführungsvariante vorgesehen, dass jede Teilbreite eine dem Vorratsbehälter räumlich zugeordnete Dosiervorrichtung, eine zwischen dem Vorratsbehälter und dem Verteilgestänge angeordnete Rohrleitung sowie eine Verteilleitung, in welche die Rohrleitung mündet und an welchem ein Prallteller angebracht ist, umfasst. Durch Abschaltung einzelner Dosiervorrichtungen lassen sich mittels solchen Düngersteuer auch teilflächenspezifische Anwendungen realisieren. Derartige Düngerstreuer sind jedoch aufgrund der mitunter langen und in der Regel eine Mehrzahl an Rohrbögen umfassenden Rohrleitungen bzw. Schlauleitungen, insbesondere bei großen Ausbringmengen und bei abrasiven Verteilgütern, sehr verschleißbehaftet. Zudem ist deren Aufbau durch die Vielzahl an Rohrleitungen bzw. Schlauchleitungen entsprechend kostenintensiv und aufwendig, wodurch derartige Düngerstreuer in der Regel wesentlich teurer in deren Anschaffung als sog. Scheibenstreuer bzw. Zentrifugalstreuer sind.

Aus der US 5 178 333 A ist ein Luftverteilungssystem für die Feldanwendung chemischer Partikel wie Düngemittel bekannt. Das Luftverteilungssystem kann über einen Fahrzeugrahmen montiert sein, zudem ist es mit einem großvolumigen Vorratsbehälter versehen. Die Luftverteilungsvorrichtung verwendet mehrere längliche Zufuhrrohre, welche von Auslegern getragen sein können. Jedes Zufuhrrohr umfasst eine vertikale Rutsche, durch welche Partikel aus Dosiertrögen in die einzelnen Zufuhrrohre geleitet werden können. Die Dosiertröge sind in einem Dosiergehäuse angeordnet, das lösbar an dem Zufuhrrohrgehäuse angebracht ist. Weiterhin sind die Zufuhrrohre mit Prallblechen versehen. Luftzufuhrmittel sind vorgesehen, um strömende Luft in die Zufuhrrohre einzuleiten.

Der Erfindung liegt die Aufgabe zugrunde, eine Verteilmaschine zum Ausbringen von körnigen landwirtschaftlichen Streugütern zu schaffen, welche für teilflächenspezifische Anwendungen auch bei starken Winden eingesetzt werden kann und welche zudem verschleißoptimiert ist.

Diese Aufgaben werden gelöst durch eine Verteilmaschine zum Ausbringen von körnigem landwirtschaftlichem Streugut mit den Merkmalen des unabhängigen Anspruchs 1 sowie durch ein Verfahren zur Verteilung von körnigem landwirtschaftlichem Streugut mit den Merkmalen des Verfahrensanspruchs 20. Vorteilhafte Weiterbildungen sind in den abhängigen Ansprüchen und der Beschreibung angegeben.

Die Erfindung betrifft eine Verteilmaschine, insbesondere einen pneumatischen Düngerstreuer, zum Ausbringen von körnigem landwirtschaftlichen Streugut, mit einer die Baugruppen bzw. Bauteile der Verteilmaschine tragenden Rahmenkonstruktion, sowie mit einem Vorratsbehälter zum Mitführen und/oder Bereitstellen des zu verteilenden Streuguts.

Um eine Verteilmaschine zum Ausbringen von körnigen landwirtschaftlichen Verteilgütern zu schaffen, welche für teilflächenspezifische Anwendungen auch bei starken Winden eingesetzt werden kann, ist erfindungsgemäß vorgesehen, dass diese kein scheibenförmiges Schleuderwerk, sondern ein sich quer zur Fahrtrichtung erstreckendes Verteilgestänge aufweist, welches Verteilgestänge einen Träger, ein Mittelteil und schwenkbar am Mittelteil angebrachte Seitenausleger aufweist, wobei am Verteilgestänge Verteilleitungen mit Verteilelementen angebracht sind und wobei zur Förderung des Streuguts zu den Verteilelementen, die Verteilleitungen mit einem Luftvolumenstrom beaufschlagbar sind. Insbesondere ist jeder Verteilleitung ein Verteilelement zugeordnet. Es wäre jedoch auch denkbar, dass einer Verteilleitung zwei oder mehr Verteilelemente zugeordnet sind.

Um eine verschleißoptimierte Verteilmaschine zu schaffen, ist erfindungsgemäß zudem vorgesehen, dass mittels zumindest einer mit dem Verteilgestänge eine bauliche Einheit bildenden und mit dem Vorratsbehälter wirkverbundenen Dosiervorrichtung, Streugut in die Verteilleitungen dosierbar ist.

Durch die erfindungsgemäße Anordnung der Dosiervorrichtung unmittelbar bzw. direkt am Verteilgestänge kann somit gegenüber dem Stand der Technik die benötigte Anzahl an Rohrleitungen, Rohrbögen, Schlauchleitungen und dergl. auf ein Minimum reduziert werden, bzw. es kann gänzlich auf derartige Rohleit- bzw. Schlauchleitungen verzichtet werden, wodurch eine verschleißoptimierte landwirtschaftliche Verteilmaschine geschaffen wird. Zweckmäßig ist an der erfindungsgemäßen Verteilmaschine nur noch eine Verbindung, insbesondere in Form eines Fördersystems, zwischen dem Vorratsbehälter und der, mit dem Verteilgestänge eine bauliche Einheit bildenden, Dosiervorrichtung erforderlich.

Bei der Verteilmaschine handelt es sich vorzugsweise um einen Düngerstreuer, zweckmäßig um einen pneumatischen Düngerstreuer bzw. Pneumatikstreuer, mittels welchen Düngerstreuerd körnige bzw. granulare landwirtschaftlich Streugüter ausbringbar sind. Bei den Streugütern kann es sich bspw. um landwirtschaftliche Dünger und/oder Mikrogranulate und/oder dergl. handeln. Auch Saatgüter, welche ganzflächig ausgebracht werden können, d.h. welche keine Ablage mittels eines Säschares erfordern, sind mittels der erfindungsgemäßen Verteilmaschine ausbringbar.

Die Verteilmaschine kann als eine Selbstfahrende oder als eine mittels Zugfahrzeug koppelbare bzw. gezogene oder als an einem Zugfahrzeug anbaubare bzw. angebaute landwirtschaftliche Verteilmaschine ausgebildet sein. Die selbstfahrende Verteilmaschine könnte zudem ein autonomes Fahrzeug (z.B. vollautonom oder teilautonom) sein, wobei das autonome Fahrzeug insbesondere für den landwirtschaftlichen Gebrauch geeignet bzw. ausgebildet ist. Zudem könnte die Verteilmaschine an ein selbstfahrendes und/oder autonomes Trägerfahrzeug montierbar bzw. montiert sein.

Zum Tragen der jeweiligen Baugruppen, Bauteile etc. umfasst die Verteilmaschine zudem eine Rahmenkonstruktion, sowie zum Mitführen und/oder Bereitstellen des Streuguts zumindest einen Vorratsbehälter. Die Verteilmaschine kann in Abhängigkeit der Anzahl an verschiedenen Streugütern auch einen mehrere Kammern aufweisenden Vorratsbehälter umfassen, welche Kammern zudem gleiche oder unterschiedliche Volumen aufweisen können. So kann der Vorratsbehälter bspw. zwei Kammern aufweisen, welche Kammern unterschiedliche oder gleiche Volumen aufweisen können, wodurch eine Verteilung von unterschiedlichen Streugütern ermöglicht wird. Insofern die Kammern unterschiedliche Volumen aufweisen, kann in der Kammer mit dem größeren Volumen das Streugut mitgeführt werden, von welchem größere Mengen benötigt werden. Die Kammern können durch ein oder mehrere Zwischenblech(e) in einer Schweißbaugruppe und/oder Montagebaugruppe (z.B. mittels Schrauben montierte Baugruppe) und/oder einem Kunststoffbehälter erzeugt werden. Auch könnten die Kammern jeweils als separate Kunststofftanks und/oder Schweißbaugruppen und/oder Montagebaugruppenausgeführt sein, welche wiederum als eine Einheit den Vorratsbehälter bilden. Auch eine Kombination von Kunststofftanks und/oder Schweißbaugruppen und/oder Montagebaugruppen wäre denkbar.

Gemäß einem weiteren Aspekt der Erfindung kann zudem jede Kammer ein separates Deckelement aufweisen, wobei es auch denkbar wäre, dass zwei oder mehr Kammern ein gemeinsames Deckelelement aufweisen.

Um hohe Ausbringmengen an Streugut zu realisieren, kann in einer Weiterbildung der Erfindung der Vorratsbehälter (bzw. die eine oder mehreren Kammern und/oder zumindest eine der mehreren Kammern) druckdicht ausgebildet sein. Zudem kann der Vorratsbehälter (bzw. die eine oder mehreren Kammern und/oder zumindest eine der mehreren Kammern) mit einem Überdruck beaufschlagbar sein, bzw. kann im Betrieb der Verteilmaschine im Vorratsbehälter (bzw. in der einen oder mehreren Kammern und/oder zumindest in einer der mehreren Kammern) ein Überdruck vorhanden sein.

Gemäß einer Weiterbildung der Erfindung kann zudem vorgesehen sein, dass die Wirkverbindung der Dosiervorrichtung und des Vorratsbehälters durch ein Fördersystem zur Förderung von Streugut ausgebildet ist.

In einer Weiterbildung der Erfindung kann zudem vorgesehen sein, dass der Vorratsbehälter bzw. die ein oder mehreren Kammern sich nach unten hin trichterförmig verjüngen, wobei an der tiefsten Stelle des Vorratsbehälters der Auslass angeordnet ist. Dabei ist der Auslass insbesondere eine Öffnung gebildet, durch welche Streugut aus dem Vorratsbehälter in das Fördersystem weitergeleitet werden kann, wodurch der Auslass gleichzeitig den Einlass des Fördersystems bilden kann. Gemäß einer alternativen Ausführungsvariante kann dem Auslass eine in dessen Position veränderbare, insbesondere verschiebbare Abdeckung zugeordnet sein, wobei durch eine entsprechende Veränderung der Position der Abdeckung jeweils definierbar ist, welcher Bereich des Vorratsbehälters bzw. der Kammer zuerst oder zuletzt entleert werden soll, also ob bspw. zuerst der vordere der mittlere oder der hintere Bereich des Vorratsbehälters bzw. der Kammer entleert werden soll. Durch eine derartige Ausführung ist zudem eine optimale Gewichtsverteilung der Verteilmaschine umsetzbar.

Zudem kann erfindungsgemäß vorgesehen sein, dass im Fördersystem das gleiche oder ein geringeres Druckniveau als im Vorratsbehälter (bzw. in der einen oder den mehreren Kammern und/oder zumindest in einer der mehreren Kammern) anliegen bzw. vorherrschen kann, um somit einen kontinuierlichen Fluss des Streuguts aus dem Vorratsbehälter zum Fördersystem zu gewährleisten.

In einer bevorzugten Ausführungsform der Erfindung ist die Verteilmaschine als pneumatisch arbeitender Düngerstreuer ausgebildet, was bedeutet, dass das Streugut von der Dosiervorrichtung zu den Verteilelementen entlang der Verteilleitungen mittels eines Luftvolumenstroms befördert werden kann bzw. im Betrieb befördert wird. Zur Beaufschlagung der Verteilleitungen mit einem Luftvolumenstrom, kann zudem vorgesehen sein, dass die Verteilleitungen mit einer Strömungserzeugungseinrichtung verbindbar sind, bzw. verbunden sind. Bei der Strömungserzeugungseinrichtung handelt es sich vorzugsweise um ein oder mehrere Gebläse (z.B. Zentrifugalgebläse, Radialgebläse, Axialgebläse, Diagonalgebläse, Querstromgebläse oder dergl.).

Die Strömungserzeugungseinrichtung ist in einer Weiterbildung der Erfindung derartig ausgeführt und/oder betreibbar, dass mittels diesem insbesondere unterschiedliche Strömungsgeschwindigkeiten des Luftvolumenstroms erzeugbar sind. Dies kann bspw. durch unterschiedliche Antriebsdrehzahlen der Strömungserzeugungseinrichtung erreicht werden, wobei hierfür die Strömungserzeugungseinrichtung zudem mittels eines motorischen Antriebs (z.B. Hydraulikmotor, Elektromotor, oder dergl. Antrieb) mit verschiedenen Drehzahlen betreibbar sein kann.

Es ist möglich, dass die Strömungserzeugungseinrichtung der Rahmenkonstruktion der Verteilmaschine räumlich zugeordnet ist und mittels Verbindungsleitungen mit den Verteilleitungen und/oder der Dosiervorrichtung verbunden ist.

Um keine Verbindungsleitungen zu benötigen bzw. um möglichst kurze Verbindungsleitungen verwenden zu können, ist es gemäß einer weiteren Ausführungsvariante möglich, dass die Strömungserzeugungseinrichtung dem Verteilgestänge zugeordnet ist. Dabei können die Strömungserzeugungseinrichtung und das Verteilgestänge eine bauliche Einheit bilden.

Der Strömungserzeugungseinrichtung kann ein Luftstromteiler zugeordnet sein, mittels welchem der mittels der Strömungserzeugungseinrichtung erzeugte Luftvolumenstrom in eine Mehrzahl von Luftvolumenströmen aufgeteilt werden kann. Dabei kann die Mehrzahl zweckmäßig der Anzahl an Verteilleitungen entsprechen.

Der Luftstromteiler kann unterschiedliche Querschnitte zur Verbindung mit den Verteilleitungen aufweisen, um somit die Luftvolumenströme in den Verteilleitungen zu variieren, wobei dies bspw. in Abhängigkeit der Länge der angeschlossenen Verteilleitungen erfolgen kann.

In einer weiteren Ausführungsvariante ist es zudem denkbar, dass im Luftstromteiler, Luftvolumenströme und/oder Strömungsgeschwindigkeiten beeinflussende Elemente angebracht sind, bspw. Klappen zur Veränderung des Durchlassquerschnitts und/oder Schaltelemente zur Veränderung des Durchlassquerschnitts, um somit wiederum die in den Verteilleitungen vorhandenen Luftvolumenströme zu variieren. Eine Variation kann bspw. in Abhängigkeit der Länge oder des Querschnitts der angeschlossenen Verteilleitungen erfolgen. Die Klappen und/oder Schaltelemente können zudem manuell verstellbar sein und/oder mittels Stellelementen motorisiert bzw. automatisiert verstellbar sein.

Der Luftstromteiler kann wiederum mit dem Verteilgestänge eine bauliche Einheit bilden, d.h. insbesondere dem Verteilgestänge räumlich zugeordnet sein.

Es sei darauf hingewiesen, dass im vorliegenden unter dem Begriff "Luftvolumenstrom" insbesondere jegliche Art von Gasförmigen Medien verstanden wird, mittels welchen körnige Streugüter förderbar sind. Darüber hinaus kann der Luftvolumenstrom auch durch eine Überdruckbeaufschlagung bspw. der Verteilleitungen erzeugt werden, wobei durch ein in den Verteilleitungen wiederum vorhandenes Druckgefälle (bspw. erzeugt durch eine Öffnung an den Verteilelementen) wiederum eine Luftstrom bzw. ein Luftvolumenstrom entsteht.

Zur Erreichung einer möglichst großen Schlagkraft weist die Verteilmaschine ein sich quer zur Fahrtrichtung erstreckendes Verteilgestänge auf. Dabei weist das Verteilgestänge einen mit der Rahmenkonstruktion verbundenen Träger, ein Mittelteil und schwenkbar am Mittelteil angebrachte Seitenausleger auf.

Zur Einhaltung einer zulässigen Transportbreite sind die Seitenausleger insbesondere um aufrechte Achsen schwenkbar am Mittelteil angebracht. In einer weiteren Ausführungsvariante wären auch horizontale Achsen denkbar. Zudem könnten in einer Weiterbildung der Erfindung die Seitenausleger aus um aufrechte und/oder horizontale Achsen schwenkbar zueinander gelagerten Segmenten zusammengesetzt sein.

Das Verteilgestänge bzw. das Mittelteil und/oder die Seitenausleger können zudem zumindest abschnittweise durch ein Fachwerk gebildet sein, insbesondere können das Mittelteil und/oder die Seitenausleger durch eine Fachwerkkonstruktion gebildet sein, d.h. insbesondere eine Gitterstruktur aufweisen. In einer bevorzugten Ausführungsvariante weist das Fachwerk bzw. die Fachwerkkonstruktion zudem eine größere Höhe als Tiefe auf. Gemäß einer weiteren Ausführungsvariante kann das Fachwerk hierbei eine dreieckförmige Gitterstruktur aufweisen.

Das Verteilgestänge kann zudem eine große Arbeitsbreite bzw. in einer Arbeitsstellung eine große Erstreckung quer zur Fahrtrichtung, von bis zu 20 Meter oder 30 Meter oder mehr aufweisen.

Gemäß einem weiteren Aspekt der Erfindung kann das Verteilgestänge, insbesondere dessen Mittelteil, mittels einer Lagerung quer zur Fahrtrichtung drehbar zum bzw. am Träger angebracht sein. Zudem kann eine Steuer- und/oder Regelbarkeit der Drehlage des Verteilgestänges vorgesehen sein, um somit eine Anpassung des Verteilgestänges an Bodenunebenheiten zu ermöglichen. Zur Steuerung und/oder Regelung der Drehlage kann insbesondere eine Stelleinrichtung vorgesehen sein.

Die Stelleinrichtung kann durch z.B. durch einen oder mehrere hydraulisch und/oder pneumatisch und/oder elektrisch betriebene Linearantriebe oder Drehantriebe oder dergl. Antriebe gebildet werden. Insbesondere kann die Stelleinrichtung durch einen oder zwei hydraulisch oder pneumatisch betriebene Zylinder gebildet sein.

Die Stelleinrichtung kann zweckmäßig doppeltwirkend sein, so dass die Drehlage im oder entgegengesetzt zum Uhrzeigersinn um die Lagerung verschwenkt werden kann. Die Stelleinrichtung kann bspw. durch zumindest einen doppeltwirkenden pneumatischen und/oder hydraulisch betriebenen Zylinder gebildet sein oder durch zumindest zwei Einfachwirkende pneumatisch und/oder hydraulisch betriebene Zylinder gebildet sein, welche einfachwirkenden Zylinder gegensinnig arbeiten.

In einer weiteren Ausführungsvariante kann vorgesehen sein, dass die Rahmenkonstruktion den Träger mit der Lagerung umfasst, an welchem Träger bzw. an welcher Lagerung das Verteilgestänge drehbar gelagert ist. Die Rahmenkonstruktion kann zudem insbesondere Mehrteilig ausgeführt sein, wobei die Einzelteile wiederum mittels einer unlösbaren (z.B. Schweißen) und/oder lösbaren (z.B. Schrauben oder dergl. Maschinenelemente) Verbindung verbunden sein können. Die Rahmenkonstruktion kann zudem derartig ausgeführt sein, dass bspw. ein Parallelogramm und/oder eine Lineareinheit, an welcher wiederum der Träger angebracht sein kann, angebaut werden kann. Zudem wäre es denkbar, dass wiederum der Vorratsbehälter und/oder das Fördersystem Bestandteil der Rahmenkonstruktion sind.

Erfindungsgemäß kann die Lagerung eine parallel zu einer Fahrtrichtung orientierte Achse und/oder Drehachse sein. Auch könnte die Lagerung ein zumindest abschnittweise kugelförmiges Element sein, um welches zumindest abschnittweise kugelförmige Element sich das Verteilgestänge, bzw. insbesondere das Mittelteil in Bezug zum Träger, bzw. das Verteilgestänge sich in Bezug auf eine Fahrtrichtung der Verteilmaschine drehen kann, wobei auch wiederum das zumindest abschnittweise kugelförmige Element eine entsprechende Achse ausbilden kann. Insbesondere ist die Lagerung derartig ausgeführt, dass sich das Verteilgestänge quer zur Fahrtrichtung drehen kann.

Um die Verteilqualität zu verbessern, bzw. um insbesondere auch starken Winden die Abdrift auf ein Minimum reduzieren zu können, ist in einer Weiterbildung der Erfindung eine Steuer- und/oder Regelbarkeit der Höhenlage des Verteilgestänges vorgesehen, d.h. dass insbesondere vorgesehen sein kann, dass das Verteilgestänge höhenverstellbar zu einer Bodenoberfläche oder zu einem Pflanzenbestand ist. Dies wird insbesondere durch eine Höhenverstellung des Verteilgestänges in Bezug auf die Rahmenkonstruktion erreicht. Die Höhenverstellung kann bspw. mittels eines zwischen der Rahmenkonstruktion und dem Träger angeordneten Parallelogramms oder einer Lineareinheit umgesetzt sein. Dabei kann dem Parallelogramm oder der Lineareinheit zumindest ein Stellglied (z.B. ein oder mehrere hydraulisch und/oder pneumatisch betriebene Linearantriebe wie bspw. Zylinder oder dergl.) entsprechend zur Variation des Höhenabstands, d.h. zum Verschwenken des Parallelogramms oder zur Verstellung der Lineareinheit zugeordnet sein.

Das Parallelogramm und/oder die Lineareinheit können zweckmäßig Bestandteil des Verteilgestänges sein, bzw. kann insbesondere der Träger des Verteilgestänges mit dem Parallellogramm und/oder der Lineareinheit verbunden sein.

Durch einen weitgehenden Verzicht an Rohrleitungen zwischen dem Vorratsbehälter und dem Verteilgestänge ist somit eine Steuer- und/oder Regelbarkeit einer Drehlage und/oder Höhenlage des Verteilgestänges möglich. Durch eine derartige Steuern- und/oder Regelbarkeit kann somit gegenüber den aus dem Stand der Technik bekannt gewordenen Verteilmaschinen eine wesentlich verbesserte Verteilqualität bei einer Minimierung der Abdrift auch bei unebenen Bodenkonturen erreicht werden, da somit erreichbar ist, dass das Verteilgestänge jeweils gleichbleibende Höhenlagen und Drehlagen zu einer Bodenoberfläche oder einem Pflanzenbestand aufweist.

Zur Steuer- und/oder Regelbarkeit der Drehlage und/oder der Höhenlage kann in einer Weiterbildung die erfindungsgemäße Verteilmaschine ein Steuerungs- und/oder Regelungssystem umfassen, wobei mittels des Steuerungs- und/oder Regelungssystems jeweils das bzw. die Stellglieder zur Steuerung- und/oder Regelung der Höhenlage des Verteilgestänges zur Rahmenkonstruktion bzw. zu einer Bodenoberfläche oder einem Pflanzenbestand und/oder eine Stelleinrichtung zur Steuerung- und/oder Regelung der Drehlage ansteuerbar und/oder regelbar sind.

Um eine noch weiter verbesserte Anpassung des Verteilgestänges zu erreichen, kann in einer Weiterbildung der Erfindung zudem vorgesehen sein, dass die Seitenausleger zum Mittelteil und/oder die Segmente der Seitenausleger jeweils zueinander anwinkelbar sind, zweckmäßig in Bezug auf eine Bodenoberfläche oder einen Pflanzenbestand. Dies wird insbesondere erreicht, in dem die Seitenausleger zum Mittelteil und/oder die Segmente der Seitenausleger um horizontale Schwenkachsen schwenkbar zueinander sind, d.h. das diese in Richtung zu oder weg von einer Bodenoberfläche oder einem Pflanzenbestand schwenkbar sind. Dieses Verschwenken kann wiederum mittels ein oder mehrerer hydraulisch oder pneumatisch oder elektrisch betriebener Linearantriebe oder Drehantriebe oder dergl. erfolgen, wobei auch wiederum diese Linearantriebe oder Drehantriebe mittels eines bzw. mittels des Steuerungs- und/oder Regelungssystems ansteuerbar und/oder regelbar sind.

Entlang dem Verteilgestänge ist eine Mehrzahl an Verteilleitungen angebracht, an welchen Verteilleitungen ein oder mehrere Verteilelemente angebracht sind. Insbesondere weisen die Verteilleitungen unterschiedliche Längen auf bzw. erstrecken sich diese jeweils von der Dosiervorrichtung entlang des Mittelteils zu den Seitenauslegern in unterschiedlichen Längen. Zudem weisen die Verteilleitungen in deren Verlauf und/oder an dessen äußerem Ende ein Verteilelement auf, insbesondere jedoch an dessen äußerem Ende.

Gemäß einem weiteren Aspekt der Erfindung können die Verteilleitungen und/oder die Verteilelemente in Bezug auf das Mittelteil zumindest weitgehend symmetrisch zueinander am Verteilgestänge angebracht sein. Zudem kann vorgesehen sein, dass die Verteilelemente eine gleiche Höhenposition am Verteilgestänge aufweisen.

Die Verteilleitungen können zudem zwischen dem Mittelteil und den Seitenauslegern bzw. zwischen den Segmenten der Seitenauslegern Trennstellen aufweisen. Dabei können die Trennstellen derartig ausgeführt sein, dass die Seitenausleger zum Mittelteil bzw. die Segmente der Seitenausleger zueinander bewegbar sind und dennoch eine Förderung von Streugut entlang der Verteilleitungen möglich ist. Die Trennstellen können bspw. durch flexible Schlauchleitungen oder durch in dessen Länge variable Elemente (z.B. Faltenbalg oder dergl.) gebildet sein.

Ein kostengünstiges Verteilelement wird insbesondere erreicht, indem dieses durch einen Prallteller gebildet ist, gegen welchen Prallteller das Streugut mittels des Luftvolumenstroms gefördert wird und mittels welches Pralltellers anschließend das Streugut fächerförmig verteilt werden kann, insbesondere in Richtung einer Bodenoberfläche oder einem Pflanzenbestand verteilt wird.

Es ist möglich, dass die Größe des mittels des Verteilelements erzeugten Streufächers variabel veränderbar bzw. Steuer- und/oder Regelbar ist, wobei dies bspw. durch eine Anpassung des Luftvolumenstroms erfolgen kann und/oder durch eine Veränderung der Winkelstellung des Pralltellers.

In einer weiteren Ausführungsvariante wäre es zudem denkbar, dass das Verteilelement durch einen bogenförmigen Endbereich der Verteilleitung gebildet wird, wobei wiederum der bogenförmige Endbereich drehbar und/oder schwenkbar an der Verteilleitung angebracht sein kann, wobei auch wiederum mittels derartiger Verteilelemente Streufächer erzeugt werden können.

Die Verteilelemente können insbesondere derartig ausgeführt sein, dass mittels diesen eine ganzflächige Verteilung des Streuguts über einer Bodenoberfläche oder einem Pflanzenbestand durchführbar ist.

In einer bevorzugten Ausführungsvariante der Verteilmaschine kann vorgesehen sein, dass die Verteilelemente derartig am Verteilgestänge angeordnet sind oder dass die mittels der Verteilelemente erzeugten Streufächer derartig sind, dass die Streufächer jeweils angrenzend zueinander sind, d.h. das jeweils keine Überlappung der Streufächer entsteht.

Gemäß einer alternativen Ausführungsvariante wäre es zudem denkbar, dass die Verteilelemente derartig am Verteilgestänge angeordnet sind oder dass die mittels der Verteilelemente erzeugten Streufächer derartig sind, dass sich die Streufächer überlappen. So kann bspw. eine doppelte- oder dreifache Überlappung der Streufächer vorgesehen sein, wodurch wiederum die Verteilqualität erhöht werden kann.

Gemäß einer weiteren Ausführungsvariante können jeweils die Höhenlage und/oder die mittels der Verteilelementen erzeugten Streufächer derartig Steuer- und/oder regelbar sein, dass in Abhängigkeit des Streuguts keine Überlappung oder eine doppelte- oder dreifache Überlappung der Streufächer erzeugt werden kann.

Die mittels der Verteilelemente erzeugten Streufächer können eine sich nach unten, d.h. von einem Verteilgestänge weg, aufweitende Dreieckförmige und/oder Kegelförmige Form aufweisen. Auch können die Streufächer eine rechteckförmige Form aufweisen. Auch eine lineare Form der Streufächer wäre denkbar.

Um die benötigte Menge Streugut möglichst effektiv einzusetzen, kann darüber hinaus vorgesehen sein, dass die mittels der Verteilelemente erzeugten Streufächer in Bereichen in denen keine Nutzpflanzen sich befinden so ausgebildet sind, dass in diesen Bereichen kein Streugut ausgebracht wird, wobei die Bereiche bspw. sog. Fahrgassen sein können. Insbesondere können die Verteilelemente in diesen Bereichen mit entsprechenden Blenden, Umlenkblechen oder dergl. versehen werden. Insbesondere können an derartigen Bereichen asymmetrische Streufächer erzeugt werden. Zudem kann in diesen Bereichen bzw. bei in diesen Bereichen befindenden Verteilelementen, die mittels der Dosiervorrichtung dosierte Menge an Streugut reduziert werden.

Zur Versorgung der Dosiervorrichtung mit dem jeweiligen Streugut ist diese mit dem zumindest einen Vorratsbehälter wirkverbunden, d.h. es kann bspw. ein Fördersystem vorgesehen sein, mittels welchem das Streugut vom Vorratstank zur, dem Verteilgestänge zugeordneten Dosiervorrichtung gefördert wird. Dabei umfasst das Fördersystem in einer bevorzugten Ausführungsform nur eine Förderleitung oder Fördereinrichtung. Gemäß einer bevorzugten Ausführungsvariante kann vorgesehen sein, dass je Streugutsorte nur ein Fördersystem vorgesehen ist.

Das Fördersystem kann zumindest abschnittsweise durch eine oder mehrere Förderschnecken gebildet sein. Die Förderschnecken können zudem in einem Winkel zueinander angeordnet sein.

Das Fördersystem kann aber auch zumindest abschnittsweise ein Förderband sein.

Es ist zudem möglich, dass das Fördersystem zumindest abschnittsweise eine Förderschnecke und abschnittsweise ein Förderband ist.

Das Fördersystem kann zudem, zumindest abschnittweise durch ein pneumatisches Fördersystem gebildet sein, bei welchem das Streugut mittels eines Luftvolumenstroms vom Vorratstank zur Dosiervorrichtung gefördert wird.

Auch andere Ausführungsformen des Fördersystems wären denkbar bzw. einsetzbar, wobei das Fördersystem jeweils derartig ausgebildet ist, dass mittels diesem körniges landwirtschaftliches Streugut förderbar ist.

Gemäß einer weiteren Ausführungsvariante der Erfindung ist es zudem denkbar, dass das Fördersystem aus zumindest zwei Abschnitten zusammengesetzt ist. die zumindest zwei Abschnitte in einer Weiterbildung zudem können schwenkbar zueinander angeordnet sein, d.h. die zumindest zwei Abschnitte können bspw. in einem veränderbaren Winkel zueinander angeordnet sein. Bspw. könnte hierbei vorgesehen sein, dass ein erster Abschnitt des Fördersystems den Auslass des Vorratsbehälters bildet sowie dass ein zweiter Abschnitt sich vom Auslass des Vorratsbehälters in Richtung des Verteilgestänges erstreckt. Um hierbei eine Höhenverstellung des Verteilgestänges zu ermöglichen, kann bspw. vorgesehen sein, dass der erste Abschnitt und der zweite Abschnitt des Fördersystems in einem veränderbaren Winkel zueinander angeordnet sind, wobei sich der Winkel jeweils in Abhängigkeit der Höhenlage des Verteilgestänges ändern kann. Zudem kann vorgesehen sein, dass die Verbindung der zwei Abschnitte derartig erfolgt, dass eine Förderung von Streugut mittels des Fördersystems unabhängig vom Winkel zischen den zumindest zwei Abschnitten ermöglicht ist, die Verbindung kann hierfür bspw. durch eine flexible Schlauchleitung erfolgen, oder durch ein in dessen Länge variabel veränderbares Element (z. B. Faltenbalg oder dergl.) gebildet sein.

Gemäß einer Weiterbildung der Erfindung kann das Fördersystem derartig ausgeführt sein, dass mittels diesem eine Steuer- und/oder Regelbarkeit der Höhenlage und/oder der Drehlage des Verteilgestänges möglich ist. So kann bspw. die Verbindung zwischen dem Fördersystem und der Verteileinheit und/oder dem Behälter mittels einer flexiblen Schlauchleitung erfolgen, oder durch ein in dessen Länge variabel veränderbares Element (z. B. Faltenbalg oder dergl.) gebildet sein. Dabei ist die Verbindung jeweils derartig ausgeführt, dass eine Förderung des Streuguts mittels des Fördersystems zur Verteileinheit und/oder zum Behälter unabhängig von der Höhenlage und/oder Drehlage des Verteilgestänges möglich ist.

Eine vorteilhafte Ausführung des Fördersystems kann zudem vorsehen, dass die mittels des Fördersystems geförderte Menge an Streugut in Abhängigkeit der mittels der Dosiervorrichtung dosierten Menge an Streugut variierbar ist, zweckmäßig steuer- und/oder regelbar ist, d.h. erhöht oder verringert oder konstant gehalten werden kann.

Es ist möglich, dass die Wirkverbindung der Dosiervorrichtung und des Vorratsbehälters ein Fördersystem und einen mit dem Verteilgestänge eine bauliche Einheit bildenden Behälter umfasst, wobei mittels des Fördersystems das Streugut in den Behälter gefördert wird. Welcher Behälter mit der Dosiervorrichtung verbunden ist bzw. Bestandteil der Dosiervorrichtung ist, so dass vom Behälter aus wiederum das Streugut in die Dosiervorrichtung gelangt. Der Behälter kann zudem mit einem Überdruck beaufschlagbar sein, welcher Überdruck bspw. mittels einer Verbindung mit der Strömungserzeugungseinrichtung erzeugbar sein kann. Auch kann der Überdruck im Behälter durch einen im Fördersystem anliegenden Überdruck erzeugt werden.

Gemäß einer weiteren Ausführungsform der Erfindung ist es möglich, dass die Wirkverbindung der Dosiervorrichtung und des Vorratsbehälters ein Fördersystem und eine mit dem Verteilgestänge eine bauliche Einheit bildende Verteileinheit umfasst, wobei mittels des Fördersystems das Streugut in eine oder in Richtung zu einer Verteileinheit förderbar ist. Dabei wird wiederum das mittels des Fördersystems in Richtung der bzw. zur Verteileinheit beförderte Streugut zur Dosiervorrichtung weitergeleitet befördert.

Es ist möglich, dass die Verteileinheit eine Mehrzahl an Abgängen aufweist, über welche Abgänge wiederum das Streugut zu der Dosiervorrichtung gefördert werden kann. Zur Erreichung einer möglichst gleichmäßigen Verteilung des Streuguts an allen Abgängen kann zudem die Verteileinheit mit Überdruck beaufschlagbar sein, so dass in den Abgängen jeweils ein Luftvolumenstrom entsteht. Der Überdruck kann hierfür insbesondere mittels einer Strömungserzeugungseinrichtung erzeugbar sein.

Es ist möglich, dass die Verteileinheit mit dem Verteilgestänge eine bauliche Einheit bildet. Insbesondere kann vorgesehen sein, dass die Verteileinheit fest mit dem Träger und/oder mit dem Parallelogramm und/oder mit der Lineareinheit verbunden ist. Ebenso könnte die Verteileinheit mit dem Mittelteil des Verteilgestänges verbunden sein.

Die Dosiervorrichtung kann eine oder mehrere Dosiereinheiten umfassen. Zweckmäßig kann für eine möglichst variable Ausbringung an Streugut vorgesehen sein, dass jeder Verteilleitung mittels einer dieser zugeordneten Dosiereinheit Streugut zugeführt wird, wobei dies insbesondere in variablen Mengen erfolgen kann.

Insofern die Zuführung von Streugut zu den Dosiereinheiten mittels einer Verteileinheit erfolgt, kann vorgesehen sein, dass die Anzahl an Abgängen entsprechend der Anzahl an Dosiereinheiten ist. Zudem kann vorgesehen sein, dass in den Abgängen den Streugutdurchfluss beeinflussende Elemente angebracht sind, bspw. Klappen zum Verschließen oder zur Freigabe oder zur Erhöhung oder Verringerung des Streugutdurchflusses. Die Klappen können zudem manuell verstellbar sein und/ oder mittels Stellelementen motorisch verstellbar sein.

Es ist möglich, dass die Dosiervorrichtung in die Verteileinheit insbesondere in die Abgänge der Verteileinheit integriert ist. So kann jedem Abgang bspw. eine Dosiereinheit zugeordnet sein, welcher Dosiereinheit wiederum eine Verteilleitung nachgeordnet sein kann.

Zur Reduktion der benötigten Dosiereinheiten ist es zudem möglich, dass zwei oder mehr Verteilleitungen mittels einer Dosiereinheit Streugut zuführbar ist.

Die ein oder mehreren Dosiereinheiten können jeweils unabhängig voneinander betreibbar sein, wobei zudem vorgesehen sein kann, dass die Ausbringmengen der Dosiereinheiten jeweils unabhängig voneinander variierbar sind. Zudem ist es möglich, dass die Dosiereinheiten unabhängig voneinander aktivierbar oder deaktivierbar sind.

In einer bevorzugten Ausführungsform ist die Dosiervorrichtung bzw. die Dosiereinheit jeweils derartig ausgebildet, dass mittels dieser eine definierte oder definierbare Menge an Streugut in die Verteilleitung oder die Verteilleitungen dosiert wird. Dabei wird das somit in die Verteilleitungen dosierte Streugut mit dem in diesen, mittels der Strömungserzeugungseinrichtung erzeugten Luftvolumenstrom in Richtung der Verteilelemente förderbar ist bzw. gefördert.

Die Dosiereinheit kann eine Zellenradschleuse sein. Die Zellenradschleuse kann zur Veränderung der dosierten Menge an Streugut jeweils mit unterschiedlichen Rotoren bestückt werden und/oder wobei die Rotoren mit unterschiedlichen Drehzahlen betrieben werden können. Der Antrieb des bzw. der Rotoren kann insbesondere mittels eines motorischen Antriebs (z.B. Hydraulikmotor, Elektromotor, oder dergl. Antrieb) erfolgen.

Alternativ kann die Dosiervorrichtung bzw. die Dosiereinheit durch eine Dosierschnecke gebildet sein. Die Dosierschnecke kann insbesondere einen Schneckengang aufweisen, welcher entgegengesetzt gewendelt ausgebildet ist.

Die Dosierschnecke kann derart ausgebildet sein, um mittels der Dosierschnecke eine definierte oder definierbare Menge an Streugut aus dem Vorratsbehälter zu entnehmen. Aufgrund des entgegengesetzt gewendelt ausgebildeten Schneckengangs kann das aus dem Vorratsbehälter entnommene Streugut entlang der Längserstreckung der Dosierschnecke in unterschiedliche, insbesondere entgegengesetzte, Richtungen gefördert werden, so dass jeweils unterschiedliche Verteilleitungen mit Streugut versorgt werden können.

Der Dosierschnecke kann ein Antrieb zugeordnet sein, welcher die Dosierschnecke mit unterschiedlichen Drehzahlen rotierend antreiben kann. Der Antrieb der Dosierschnecke kann durch einen motorischen Antrieb, wahlweise durch einen Hydraulikmotor, Elektromotor oder dergl. Antrieb, gebildet sein.

Gemäß einer Weiterbildung kann vorgesehen sein, dass in einem Gehäuse zwei oder vier oder mehr Dosiereinheiten angeordnet sind, d.h. das in einem Gehäuse zwei oder vier oder mehr Rotoren angebracht sind welche Rotoren jeweils einen separaten motorischen Antrieb aufweisen können. Die Rotoren können hierbei jeweils gleich sein. Auch kann zumindest ein Rotor anders ausgeführt sein, d.h. insbesondere andere Öffnungen aufweisen. Zudem können die Rotoren mit gleichen Drehzahlen betreibbar sein oder aber auch mit unterschiedlichen Drehzahlen betreibbar sein.

Gemäß einer weiteren Ausführungsvariante wäre es denkbar, dass zumindest zwei Rotoren mit einem motorischen Antrieb betreibbar sind, wobei zur Aktivierung und/oder Deaktivierung einzelner Rotoren hierbei wiederum ein Schaltelement, Getriebeelement oder dergl. vorgesehen sein kann. Zweckmäßig kann hierbei vorgesehen sein, dass zumindest zwei Rotoren mit einem motorischen Antrieb betreibbar sind zur Erzeugung einer gewünschten bzw. einer unterschiedlichen Drehzahl jedoch eine Getriebeeinheit vorgesehen ist.

Die Dosiervorrichtung bzw. die die Dosiervorrichtung bildenden Dosiereinheiten können in einer bevorzugten Ausführungsvariante dem Mittelteil des Verteilgestänges zugeordnet sein. Insbesondere können die die Dosiervorrichtung bildenden Dosiereinheiten derartig am Verteilgestänge angebracht sein, dass diese den Höhenbewegungen und/oder Drehbewegungen des Verteilgestänges zumindest weitgehend synchron folgen können.

Eine vereinfachte Verbindung der Dosiervorrichtung bzw. der Dosiereinheit und/oder der Strömungserzeugungseinrichtung mit den Verteilleitungen kann erreicht werden, indem der Dosiereinheit eine Fallschleuse nachgeordnet ist, insbesondere indem eine Fallschleuse unterhalb und/oder zumindest abschnittweise neben der Dosiereinheit angebracht ist.

Es ist zudem möglich, dass die Fallschleuse zumindest einen Anschluss für eine Strömungserzeugungseinrichtung aufweist. Zudem ist es möglich, dass die Fallschleuse einen oder mehrere Anschlüsse für eine oder mehrere Verteilleitungen aufweist.

Gemäß einer Weiterbildung der Fallschleuse ist es zudem möglich, dass in dieser, Streugutdurchfluss beeinflussende Elemente angebracht sind, bspw. Klappen zum Verschließen oder zur Freigabe der Streugutdosierung mittels der Dosiereinheit in die Fallschleuse bzw. in die Verteilleitungen. Die Klappen können zudem manuell verstellbar sein und/oder mittels Stellelementen automatisiert bzw. motorisch verstellbar sein. Durch eine derartige Ausführung ist es somit möglich, mit nur einer Dosiervorrichtung bzw. Dosiereinheit zwei oder mehr Teilbreiten zu aktivieren oder deaktivieren. Insbesondere ist es durch eine derartige Ausführungsform möglich, Teilbreiten zu schalten ohne hierfür für jede Teilbreite eine separate Dosiereinheit zu benötigen, wodurch wiederum ein wesentlich vereinfachter Aufbau der Verteilmaschine erreicht wird und wodurch die Anzahl an Teilbreiten kostengünstig erhöht werden kann.

In einer vorteilhaften Ausführungsvariante kann vorgesehen sein, dass jede Teilbreite bspw. 1,5 Meter aufweist. Dies kann bspw. bei einer Verteilmaschine mit einem Verteilgestänge mit einer Arbeitsbreite von 36 Meter dadurch erreicht werden, in dem 12 Dosiereinheiten vorgesehen sind, welchen 12 Dosiereinheiten jeweils eine Fallschleuse nachgeordnet ist, an welche Fallschleuse wiederum zwei Verteilleitungen (somit in Summe 24 Verteilleitungen) angebracht sind. Die Fallschleuse kann zudem jeweils eine Klappe aufweisen, mittels derer zumindest eine Dosierung von Streugut in eine Verteilleitung geschlossen werden kann.

Es kann vorgesehen sein, dass jede Verteilleitung eine Teilbreite ausbildet, wobei hierbei wiederum jeder Verteilleitung ein Verteilelement zugeordnet sein kann.

Zur Schaffung einer möglichst flexibel einsetzbaren Verteilmaschine kann vorgesehen sein, dass mittels dieser zwei oder mehr verschieden Sorten an Streugut ausbringbar sind. Hierfür kann vorgesehen sein, dass mittels des Fördersystems eine Mischung des Streuguts erfolgt. Dies kann bspw. dadurch erreicht werden, indem Streugut aus zwei Kammern des Vorratsbehälters mittels des Fördersystems zur Dosiervorrichtung gefördert wird. Ebenso könnte vorgesehen sein, dass je Streugutsorte ein Fördersystem vorgesehen ist und jeweils mittels einer Dosiervorrichtung bzw. mittels der Dosiereinheiten das jeweilige Streugut bzw. die zwei oder mehr Streugüter in variablen Mengen in die Verteilleitung dosierbar sind. Zudem könnte vorgesehen sein, dass je Streugut ein Fördersystem und eine Dosiervorrichtung vorgesehen sind.

In einer Weiterbildung der Erfindung kann dem Behälter am Verteilgestänge oder der Verteileinheit eine Sensoranordnung zur Erfassung von dessen Füllstand zugeordnet sein. Zudem kann vorgesehen sein, dass das Fördersystem jeweils in Abhängigkeit des Füllstands aktiviert oder deaktiviert wird oder das dessen Fördermenge erhöht oder verringert wird.

Es ist zudem möglich, dass der Dosiervorrichtung eine Sensoranordnung zu Ermittlung und/oder Auswertung der dosierten Menge an Streugut zugeordnet ist und/oder dass eine Datenverarbeitungseinrichtung vorgesehen ist, mittels welcher wiederum die mittels der Dosiervorrichtung dosierte Menge an Streugut auswertbar ist. Zudem kann vorgesehen sein, dass das Fördersystem jeweils in Abhängigkeit der mittels der Dosiervorrichtung dosierten Menge an Streugut aktiviert oder deaktiviert oder dessen Fördermenge erhöht oder verringert wird. Eine Auswertung der mittels der Dosiervorrichtung bzw. der mittels der Dosiereinheiten dosierten Menge an Streugut kann bspw. auf Basis des verwendeten Rotors und der Drehzahl mit der dieser angetrieben wird erfolgen, wobei dies bspw. mittels eines in der Datenverarbeitungseinrichtung hinterlegten Steuerungs- und/oder Regelungsprogramms erfolgen kann. Wobei zudem in der Datenverarbeitungseinrichtung für die Rotoren Kennwerte (z.B. ein Abdrehfaktor) hinterlegt sein können bzw. durch eine Bedienperson eingegeben werden können.

In einer Weiterbildung der Erfindung können dem Verteilgestänge Beleuchtungsmittel zugeordnet sein, so dass die jeweiligen Streufächer auch bei arbeiten in der Nacht sichtbar sind. Dabei kann jedem Verteilelement ein Beleuchtungsmittel zugeordnet sein und/oder es können am Mittelteil des Verteilgestänges zumindest ein bzw. zwei Beleuchtungsmittel derartig angebracht sein, dass das Verteilgestänge bzw. insbesondere die Seitenausleger entsprechend beleuchtet werden. Zudem kann vorgesehen sein, dass jeweils nur die Beleuchtungsmittel der Verteilelemente aktiviert sind, mittels denen eine Verteilung von Streugut ausgeführt wird.

Zur Erreichung einer vereinfachten Steuerung und/oder Regelung der Drehlage und/oder Höhenlage des Verteilgestänges kann vorgesehen sein, dass die mit dem Verteilgestänge eine bauliche Einheit bildenden Komponenten, (d.h. die Dosiervorrichtung und/oder die Strömungserzeugungseinrichtung und/oder der Behälter und/oder die Verteileinheit und/oder der Luftstromteiler und/oder die Fallschleuse) am Verteilgestänge bzw. am Träger und/oder am Mittelteil des Verteilgestänges angebracht sind. Insbesondere kann vorgesehen sein, dass die Komponenten derartig am Verteilgestänge angebracht sind, dass dessen Schwerpunkt sich zumindest annähernd in der Mitte, d.h. im Zentrum des Verteilgestänges befindet und/oder dass sich der Schwerpunkt in einen Bereich befindet, welcher nur einen geringen Abstand zum Zentrum des Verteilgestänges aufweist, bspw. maximal 25 cm oder 50 cm oder 100 cm vom Zentrum entfernt ist, wobei das Zentrum wiederum sich auf einer parallel zur Fahrtrichtung orientierten Ebene befinden kann und wobei diese Ebene wiederum die Lagerung schneiden kann.

Gemäß einem weiteren Aspekt der Erfindung können an der Verteilmaschine und/oder am Verteilgestänge verschiedene Sensoranordnungen angebracht sein. So kann eine Sensoranordnung zur Ermittlung und/oder Auswertung einer Höhenlage des Verteilgestänges vorgesehen sein. Dabei kann die Sensoranordnung zur Ermittlung und/oder Auswertung der Höhenlagen bspw. einen oder mehrere Ultraschallsensoren und/oder Abstandsensoren und/oder dergl. umfassen. Darüber hinaus kann eine Sensoranordnung zur Ermittlung und/oder Auswertung einer Drehlage des Verteilgestänges vorgesehen sein. Dabei kann die Sensoranordnung zur Ermittlung und/oder Auswertung einer Drehlage bspw. einen oder mehrere Winkelsensoren und/oder Beschleunigungssensoren und/oder Drehratensensoren und/oder Drucksensoren oder dergl. umfassen.

Dabei sind/können wiederum mittels einer Datenverarbeitungseinrichtung, insbesondere mittels eines in einer Datenverarbeitungseinrichtung hinterlegten Steuerungs- und/oder Regelungsprogramms, aus den Ausgangssignalen der Sensoranordnungen, Steuerungs- und/oder Regelungssignale für die Stelleinrichtung und/oder Stellglieder oder dergl. Antriebe zur automatisieren Steuerung und/oder Regelung der Höhenlage und/oder der Drehlage des Verteilgestänges generierbar sind bzw. generiert werden. Insbesondere kann zur Generierung von Stell- und/oder Regelungssignalen der Stellglieder und/oder der Stelleinrichtung mittels des in der Datenverarbeitungseinrichtung hinterlegten Steuerungs- und/oder Regelungsprogramms auf Basis der mittels der Sensoranordnungen erfassten Höhenlage und/oder Drehlage eine Sensordatenfusion durchgeführt werden.

Zudem kann an der Verteilmaschine, zweckmäßig am Verteilgestänge eine Sensoranordnung (z.B. Radarsensoren oder Kamerasysteme oder dergl.) zur Ermittlung und/oder Auswertung der Streufächer angebracht sein, wobei wiederum auf Basis der erfassten Streufächer die Höhenlage und/oder die Drehlage entsprechend automatisiert Steuer- und/oder Regelbar und/oder manuell veränderbar sein kann.

Die Stelleinrichtung und/oder das zumindest eine Stellglied oder dergl. Antriebe können zudem mit einer Steuereinrichtung wirkverbunden sein, wobei die Steuereinrichtung insbesondere mit einer elektrischen und/oder pneumatischen und/oder hydraulischen und/oder einer Kombination dieser Energie- und Signalübertragungsarten basierenden Steuerung und/oder Schaltung in Wirkverbindung stehen oder diese mit umfassen bzw. beinhalten kann. Die Steuereinrichtung ist insbesondere derartig ausgeführt, dass mittels dieser die Stelleinrichtung und/oder Stellglieder oder dergl. Antriebe mittelbar oder unmittelbar angesteuert und/oder geregelt und/oder parametrisiert werden können, bzw. dass diese mittelbar oder unmittelbar ansteuerbar und/oder regelbar und/oder parametrisierbar sind. Zudem kann die Datenverarbeitungseinrichtung Bestandteil der Steuerungseinrichtung sein. Die Datenverarbeitungseinrichtung kann zudem bspw. eine Rechnereinheit mit einem in einem Speicher dieser hiterlegtem Steuerungs- und/oder Regelungsprogramm sein.

Gemäß einer Weiterbildung der Erfindung können in der Datenverarbeitungseinrichtung Sollvorgaben für eine Höhenlage und/oder Drehlage eingebbar sein oder hinterlegt sein. Dabei können wiederum auf Basis der Sollvorgaben und mittels der Sensoranordnungen ermittelten Höhenlage und/oder Drehlage mittels der Datenverarbeitungseinrichtung Steuerungs- und/oder Regelungssignale für das Stellglied und/oder die Stelleinrichtung generierbar und/oder ausgebbar sein n. Darüber hinaus wäre es denkbar, dass jeweils für eine Ausbringmenge des Streuguts und/oder für die Streufächer entsprechende Sollvorgaben in der Datenverarbeitungseinrichtung eingebbar und/oder hinterlegt sind, und wiederum die Dosiervorrichtung und/oder die Verteilelemente auf Basis dieser Sollvorgaben mittels der Datenverarbeitungseinrichtung Steuer- und/oder Regelbar sind.

Es sei darauf hingewiesen, dass im vorliegenden die Begriffe Sensor und Sensoranordnung für jegliche Sensoren, Messmittel, Erfassungsmittel oder dergl. zutreffen, wenn also im vorliegenden von Sensoren oder von Sensoranordnung die Rede ist, so sind somit gleichermaßen jegliche Sensoren, Messmittel, Erfassungsmittel oder dergl. davon umfasst, wobei zudem eine Sensoranordnung sowohl Sensoren als auch Messmittel und/oder Erfassungsmittel und/oder dergl. mit beinhalten bzw. durch derartige gebildet sein kann.

Die Fahrtrichtung bezieht sich jeweils auf eine Vorwärtsrichtung der Verteilmaschine, d.h. auf eine Richtung mit der die Verteilmaschine während eines Arbeitsprozesses in der Regel über eine zu bearbeitende Bodenfläche oder einem Pflanzenbestand bewegt wird.

Es sei noch darauf hingewiesen, dass die Begriffe "Steuerbarkeit" und "Regelbarkeit" bzw. "Steuerung" und "Regelung" sich auf elektronische und/oder pneumatische und/oder hydraulische Steuerungen beziehen können, die je nach Ausbildung Steuerungsaufgaben und/oder Regelungsaufgaben übernehmen können. Auch wenn hierin der Begriff "Steuern" verwendet wird, kann damit gleichsam zweckmäßig auch "Regeln" umfasst sein. Ebenso kann bei Verwendung des Begriffs "Regeln" gleichsam auch ein "Steuern" damit umfasst sein.

Es sei noch darauf hingewiesen, dass im vorliegenden die Definition "eine bauliche Einheit bilden" derartig zu verstehen ist, dass die jeweiligen Komponenten dem entsprechenden Maschinenbauteil räumlich zugeordnet sind und bspw. fest mit diesen verbunden sind, insbesondere mittels Maschinenelementen (z.B. Schrauben, Bolzen, Splinten, oder dergl.) und/oder mittels unlösbaren Verbindungen (z.B. schweißen, löten, oder dergl.) mit diesen verbunden sind. So kann die Definition "eine bauliche Einheit bilden" insbesondere bedeuten, dass bspw. die Dosiervorrichtung und/oder die Strömungserzeugungseinrichtung fest mit dem Träger und/oder dem Mittelteil und/oder dem Parallelogramm verbunden sind. Gemäß einer vorteilhaften Ausführungsvariante kann die Definition "eine bauliche Einheit bilden" zweckmäßig umfassen, dass die jeweiligen eine bauliche Einheit bildenden Komponenten zumindest annähernd die gleichen Bewegungen (z.B. Drehbewegungen oder Höhenbewegungen) wie das Verteilgestänge durchführen, insbesondere zumindest weitgehend synchrone Bewegungen wie das Verteilgestänge oder dessen Mittelteil und/oder dessen Seitenausleger durchführen.

Wenn zuvor die erfindungsgemäße Verteilmaschine beschrieben wurde, so sei an dieser Stelle ausdrücklich betont, dass alle Aspekte und Ausführungsvarianten, die im Zusammenhang mit der Verteilmaschine erläutert wurden, gleichermaßen Teilaspekte des nachfolgenden erfindungsgemäßen Verfahrens betreffen oder sein können. Wenn daher an einer Stelle bei der Beschreibung oder auch bei den Anspruchsdefinitionen von der erfindungsgemäßen Verteilmaschine die Rede ist, so gilt dies gleichermaßen für das erfindungsgemäße Verfahren. In umgekehrter Weise gilt dasselbe, so dass auch alle Aspekte die im Zusammenhang mit dem erfindungsgemäßen Verfahren erläutert werden, gleichermaßen Teilaspekte der Verteilmaschine sein können.

Zur Lösung der Aufgaben schlägt die Erfindung zudem ein Verfahren zur Verteilung von körnigem landwirtschaftlichem Streugut vor. Wobei das Verfahren vorzugsweise mittels eines pneumatischen Düngerstreuers ausgeführt wird, insbesondere wie in diesem Dokument beschrieben. Das erfindungsgemäße Verfahren umfasst die Schritte,
- Mitführung und/oder Bereitstellung des körnigen Streuguts mittels eines Vorratsbehälters,
- Förderung des Streuguts mittels eines Fördersystems, vom Vorratsbehälter zu einer, mit einem sicher quer zu einer Fahrtrichtung ersteckenden Verteilgestänge eine bauliche Einheit bildenden, Dosiervorrichtung,
- Dosierung von Streugut in eine Mehrzahl an, am Verteilgestänge angebrachten Verteilleitungen, mittels der Dosiervorrichtung,
- Förderung des Streuguts entlang der Verteilleitungen, durch Beaufschlagung der Verteilleitungen mit einem, mittels einer Strömungserzeugungseinrichtung, erzeugbaren Luftvolumenstrom,
- Verteilung des Streuguts, durch Erzeugung von Streufächern mittels den Verteilleitungen zugeordneten Verteilelementen.

Die Verfahrensschritte können insbesondere kontinuierlich mittels des pneumatischen Düngerstreuers in der vorabgenannten oder einer anderen Reihenfolge durchgeführt werden.

Gemäß einer Weiterbildung des Verfahrens kann zudem, eine Schwenkbarkeit des Verteilgestänges quer zur Fahrtrichtung mittels einer Lagerung vorgesehen sein. Des Weiteren kann eine Steuer- und/oder Regelbarkeit der Drehlage auf Basis von mittels einer Sensoranordnung zur Ermittlung und/oder Auswertung einer Drehlage erfassten Drehlage vorgesehen sein, wobei die Steuer- und/oder Regelung der Drehlage mittels einer Stelleinrichtung erfolgt.

Zudem kann gemäß einem weiteren Aspekt des Verfahrens eine Steuer- und/oder Regelbarkeit einer Höhenlage des Verteilgestänges in Abhängigkeit einer, mittels einer Sensoranordnung zur Ermittlung und/oder Auswertung einer Höhenlage, erfassten Höhenlage des Verteilgestänges vorgesehen sein.

Die zuvor beschriebenen bevorzugten Ausführungsformen und Merkmale der Erfindung sind beliebig miteinander kombinierbar. Weitere Einzelheiten und Vorteile der Erfindung werden im Folgenden unter Bezug auf die beigefügten Zeichnungen beschrieben. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind. Es zeigen:
- Figur 1A: eine Perspektivansicht einer landwirtschaftlichen Verteilmaschine zum Ausbringen von körnigem landwirtschaftlichen Streugut, mit einer dem Verteilgestänge zugeordneten Verteileinheit,
- Figur 1B: eine Seitenansicht einer landwirtschaftlichen Verteilmaschine zum Ausbringen von körnigem landwirtschaftlichen Streugut gemäß der Figur 1A,
- Figur 1C: eine Ansicht von hinten einer landwirtschaftlichen Verteilmaschine zum Ausbringen von körnigem landwirtschaftlichen Streugut gemäß den Figuren 1A und 1B mit einer Mehrzahl von schematisch dargestellten Streufächer,
- Figur 1D: eine Draufsicht einer landwirtschaftlichen Verteilmaschine zum Ausbringen von körnigem landwirtschaftlichen Streugut gemäß den Figuren 1A, 1C und 1D mit einem im vorderen Bereich des Vorratsbehälters angeordneten Auslass,
- Figur 1E: eine Draufsicht einer landwirtschaftlichen Verteilmaschine zum Ausbringen von körnigem landwirtschaftlichen Streugut gemäß den Figuren 1A, 1C und 1D mit einem im mittleren Bereich des Vorratsbehälters angeordneten Auslass,
- Figur 2A: eine Perspektivansicht einer landwirtschaftlichen Verteilmaschine zum Ausbringen von körnigem landwirtschaftlichen Streugut mit zwei dem Verteilgestänge zugeordneten Verteileinheiten,
- Figur 2B: eine Seitenansicht einer landwirtschaftlichen Verteilmaschine zum Ausbringen von körnigem landwirtschaftlichen Streugut gemäß der Figur 2A,
- Figur 2C: eine Ansicht von hinten einer landwirtschaftlichen Verteilmaschine zum Ausbringen von körnigem landwirtschaftlichen Streugut gemäß den Figuren 2A und 2B mit einer Mehrzahl von schematisch dargestellten Streufächer,
- Figur 2D: eine Draufsicht einer landwirtschaftlichen Verteilmaschine zum Ausbringen von körnigem landwirtschaftlichen Streugut, gemäß den Figuren 2A, 2C und 2D mit einem zwei Kammern aufweisenden Vorratsbehälter wobei jeder Kammer im hinteren Bereich ein Auslass zugeordnet ist,
- Figur 2E: eine Draufsicht einer landwirtschaftlichen Verteilmaschine zum Ausbringen von körnigem landwirtschaftlichen Streugut, gemäß den Figuren 2A, 2C und 2D mit einem zwei Kammern aufweisenden Vorratsbehälter wobei jeder Kammer im vorderen Bereich ein Auslass zugeordnet ist,
- Figur 3: eine Perspektivansicht einer landwirtschaftlichen Verteilmaschine zum Ausbringen von körnigem landwirtschaftlichen Streugut mit zwei dem Verteilgestänge zugeordneten Behältern,
- Figur 4A: eine schematische Perspektivansicht einer Anordnung von Dosiereinheiten an einem Verteilgestänge wobei jede Dosiereinheit mit einer Leitung mit Streugut versorgbar ist,
- Figur 4B: eine schematische Perspektivansicht einer Anordnung von Dosiereinheiten an einem Verteilgestänge wobei jede Dosiereinheit mit zwei Leitungen mit Streugut versorgbar ist,
- Figur 5: eine Schnittansicht von zwei, die Dosiervorrichtung bildenden Dosiereinheiten,
- Figur 6: eine Detailansicht eines durch eine Förderschnecke gebildeten Fördersystems, mittels welchem Streugut in eine Verteileinheit gefördert wird,
- Figur 7: ein Blockschaltbild zur Steuerung- und/oder Regelung der Drehlage und/oder Höhenlage des Verteilgestänges,
- Figur 8: ein Blockschaltbild zur Steuerung- und/oder Regelung der Dosiervorrichtung und/oder des Fördersystems.

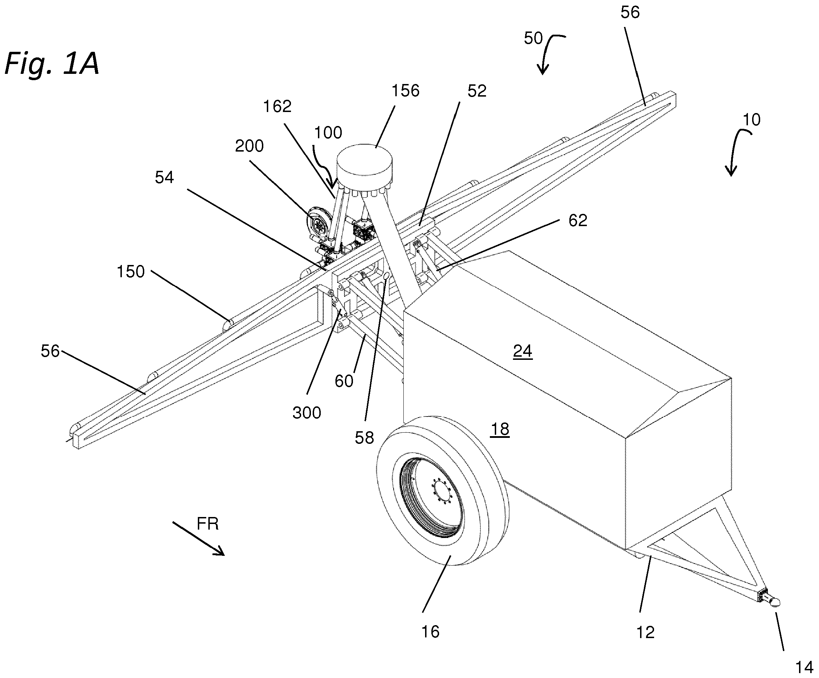

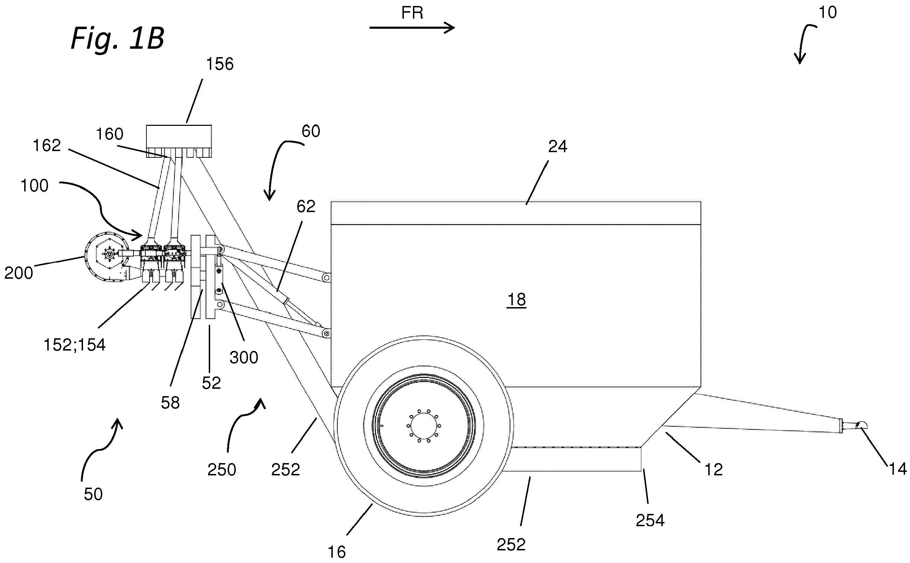

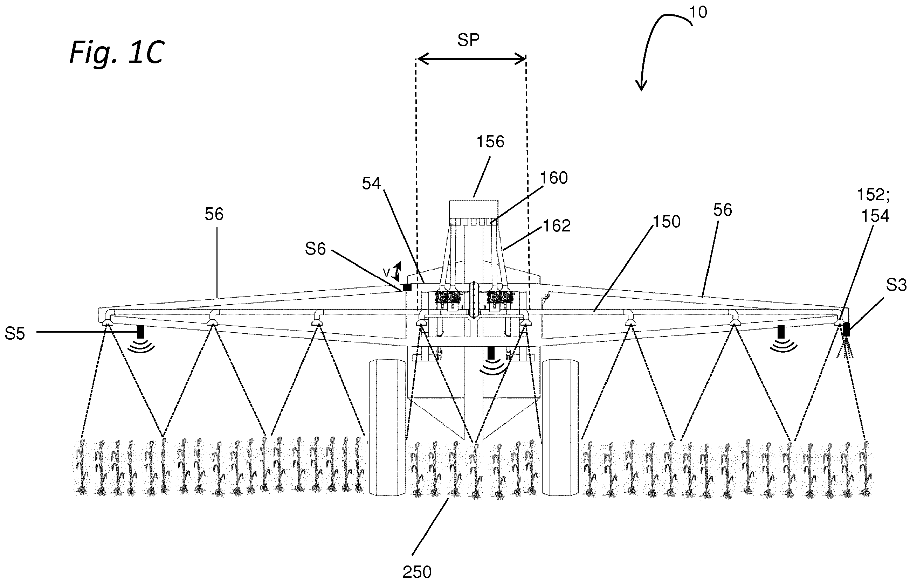

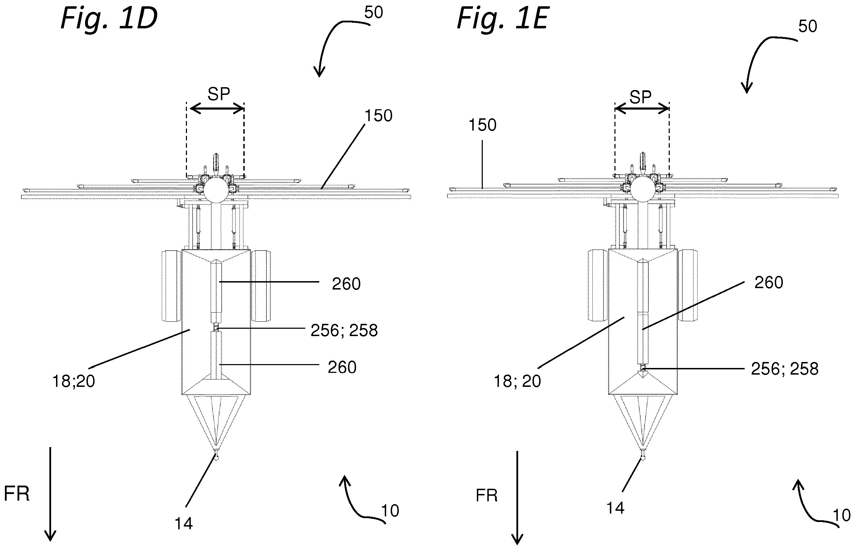

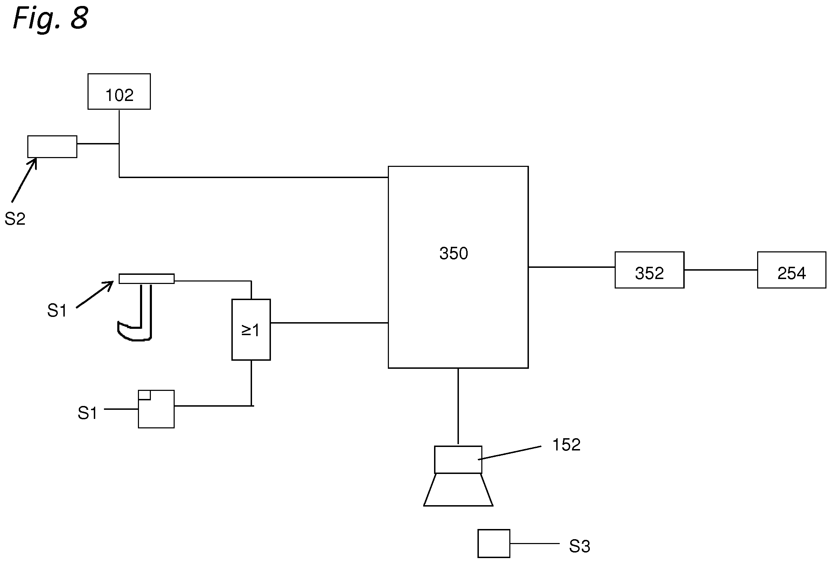

Die in den Figuren 1 bis 8 gezeigten Ausführungsformen stimmen zumindest teilweise überein, so dass ähnliche oder identische Teile mit den gleichen Bezugszeichen versehen sind und zu deren Erläuterung auch auf die Beschreibung der anderen Ausführungsformen bzw. Figuren verwiesen wird, um Wiederholungen zu vermeiden. Die dargestellten Ausführungsformen stellen lediglich Beispiele dar, wie die erfindungsgemäße landwirtschaftliche Verteilmaschine, sowie das erfindungsgemäße Verfahren ausgestaltet und ausgeführt sein können und stellen keine abschließende Begrenzung dar.

Ausführungsbeispiele einer erfindungsgemäßen Verteilmaschine 10 zum Ausbringen von körnigem landwirtschaftlichem Streugut gehen aus den verschiedenen Ansichten der Figuren 1 bis 3 hervor. Bei der Verteilmaschine 10 handelt es sich insbesondere um einen Düngerstreuer, zweckmäßig einen pneumatischen Düngerstreuer, mittels welches Düngerstreuer körnige bzw. granulare landwirtschaftliche Streugüter bzw. Verteilgüter, wie bspw. Dünger oder Mikrogranulate, aber auch Saatgüter ausgebracht werden können.

Die Verteilmaschine 10 ist gemäß der Figuren 1, 2 und 3 jeweils als eine mittels eines Zugfahrzeugs koppelbare bzw. gezogene landwirtschaftliche Verteilmaschine 10 ausgebildet. Die erfindungsgemäße Verteilmaschine 10 könnte aber auch eine Selbstfahrende und/oder eine an einem Zugfahrzeug anbaubare bzw. angebaute Verteilmaschine 10 sein. Die Verteilmaschine 10 umfasst jeweils eine Rahmenkonstruktion 12 zum Tragen der Baugruppen der Verteilmaschine 10, wobei sich am vorderen Ende der Rahmenkonstruktion 12 eine Verbindungseinrichtung 14 (gemäß der Figuren 1 bis 3 in Form einer Zugöse) befindet, welche Verbindungseinrichtung 14 derartig ausgebildet ist, um die Verteilmaschine 10 mit einem nicht dargestellten Zugfahrzeug verbinden zu können. Um die Verteilmaschine 10 über bspw. eine Ackerfläche bewegen zu können, umfasst diese zudem ein Fahrwerk 16, welches Fahrwerk 16 gemäß den Ausführungsbeispielen zwei Laufräder umfasst. Dabei wäre es auch denkbar, dass das Fahrwerk 16 durch ein oder mehrere Bandlaufwerke bzw. Raupenlaufwerke gebildet wird.

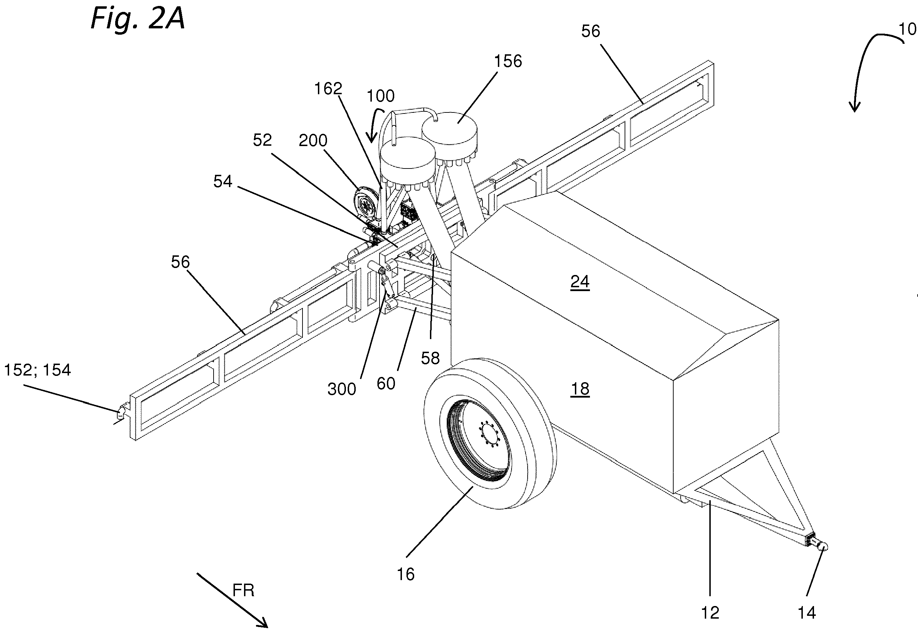

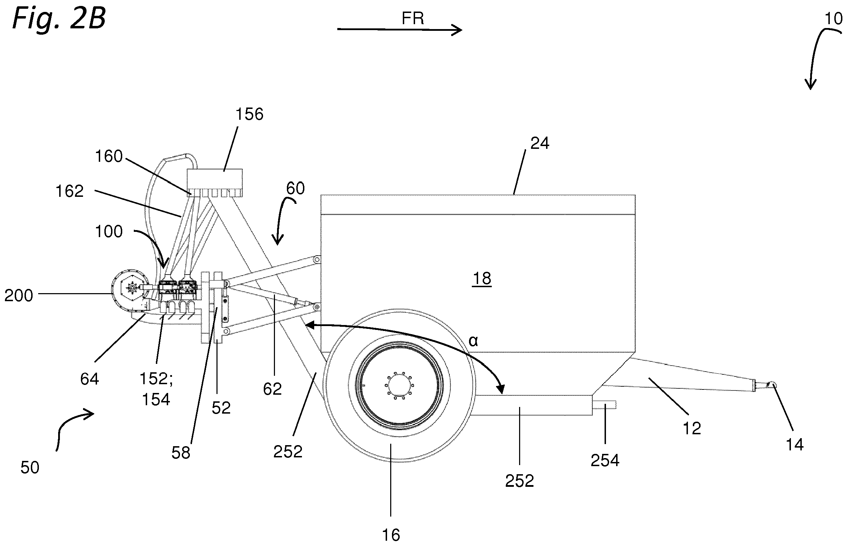

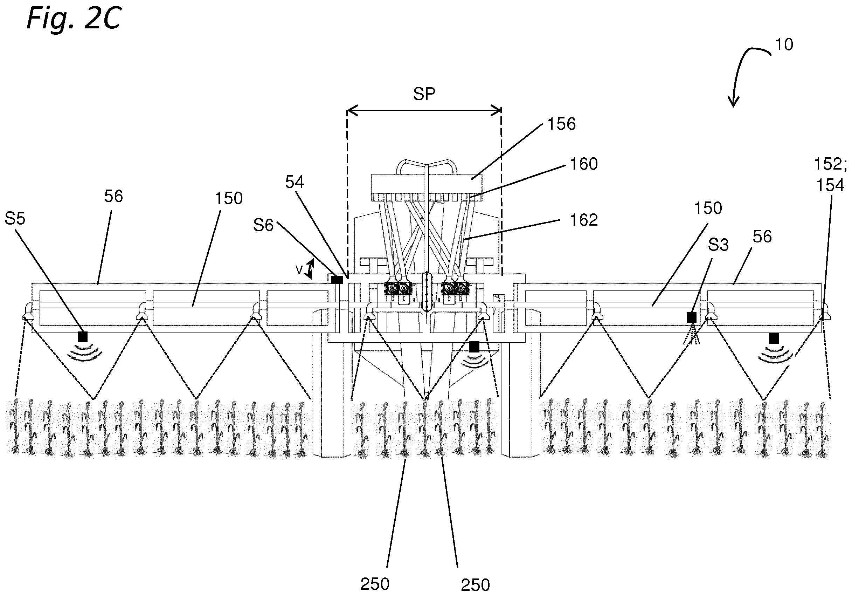

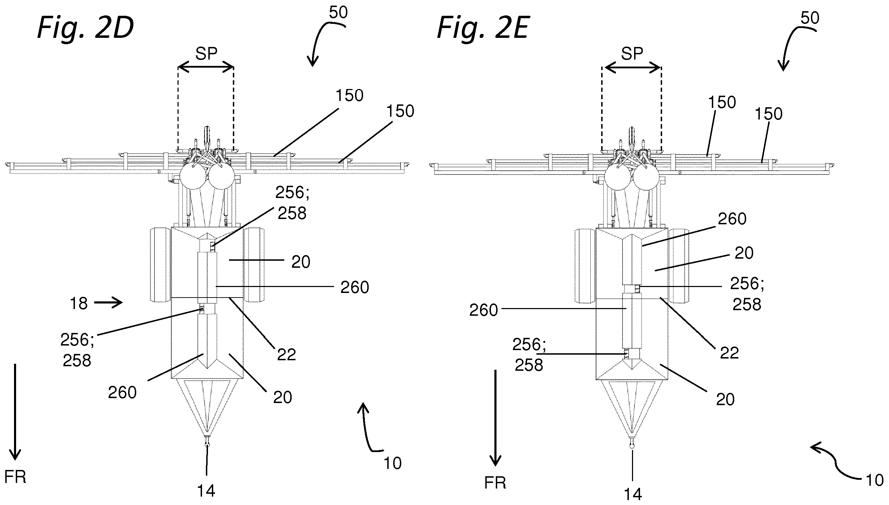

Zum Mitführen und/oder Bereitstellen des Streuguts ist zudem an der Rahmenkonstruktion 12 ein Vorratsbehälter 18 angebracht. Dabei kann der Vorratsbehälter 18 in Abhängigkeit der Anzahl an verschiedenen Streugüter eine oder mehrere Kammern 20 aufweisen (vergl. bspw. Figur 1D und 2D). Gemäß den Ausführungsbeispielen der Figur 2 weisen die Kammern 20 hierbei gleiche Volumen auf, wobei diese auch unterschiedliche Volumen aufweisen können, so dass eine Anpassung an die jeweils benötigte Menge an Streugut ermöglicht wird. Die Kammern 20 sind zudem durch ein Zwischenblech 22 in einer gemeinsamen Schweißbaugruppe gebildet. Dabei können die Kammern 20 auch durch ein Zwischenblech 22 in einer Montagebaugruppe gebildet werden. Auch könnten die Kammern 20 durch mehrere Schweißbaugruppen und/oder Kunststofftanks und/oder Montagebaugruppen gebildet werden, welche wiederum als eine Einheit den Vorratsbehälter 18 bilden können.

Der Vorratsbehälter 18 weist ein Deckelelement 24 auf. Zudem weisen die mehreren Kammern 20 gemäß der Figuren 2 ebenso ein gemeinsames Deckelelement 24 auf. Zudem kann der Vorratsbehälter 18 bzw. können die Kammern 20 bzw. kann zumindest eine der Kammern 20 druckdicht ausgebildet sein. Auch könnte der Vorratsbehälter 18 bzw. die Kammern 20 bzw. zumindest eine der Kammern 20 mit einem Überdruck beaufschlagt sein.

Zur Erreichung einer großen Verteilbreite, d.h. zur Erreichung einer großen Schlagkraft mittels der Verteilmaschine 10 weist diese ein sich quer zur Fahrrichtung FR erstreckendes Verteilgestänge 50 auf. Dabei weist das Verteilgestänge 50 einen mit der Rahmenkonstruktion 12 verbundenen Träger 52, ein Mittelteil 54 und schwenkbar am Mittelteil 54 angebrachte Seitenausleger 56 auf. Das Verteilgestänge 50 kann hierbei bspw. Arbeitsbreiten von 20 Meter, 30 Meter oder mehr aufweisen.

Das Verteilgestänge 50 ist zudem mittels einer Lagerung 58 drehbar zum bzw. am Träger 52 angebracht. Insbesondere ist das Verteilgestänge 50 mittels der Lagerung 58 quer zur Fahrtrichtung drehbar gelagert. Die Lagerung 58 ist gemäß der Ausführungsbeispiele eine parallel zur Fahrtrichtung orientiere Achse bzw. Drehachse, wobei hierbei auch andere Ausführungsvarianten denkbar wären. Bspw. könnte die Lagerung 58 auch ein zumindest abschnittweise kugelförmiges Element sein, um welches zumindest abschnittweise kugelförmige Element sich das Verteilgestänge 50 quer zur Fahrtrichtung drehen kann.

Zur Einhaltung einer maximal zulässigen Transportbreite können die Seitenausleger 56 um aufrechte (siehe bspw. Figur 2A) und/oder um horizontale Achsen schwenkbar am Mittelteil 54 angebracht sein. Auch können die Seitenausleger 56 aus zwei oder mehr Segmenten zusammengesetzt sein, welche Segmente wiederum um aufrechte und/oder horizontale Achsen zueinander verschwenkbar sein können. Das Verteilgestänge 50 bzw. das Mittelteil 54 und/oder die Seitenausleger 56 sind zudem zumindest abschnittsweise durch ein Fachwerk bzw. durch eine Fachwerkkonstruktion gebildet. Darüber hinaus weist das Fachwerk bzw. die Fachwerkkonstruktion zudem eine größere Höhe als Tiefe auf.

Das Verteilgestänge 50 ist zudem höhenverstellbar an der Rahmenkonstruktion 12 angebracht, um somit eine Höhenlage des Verteilgestänges 50 zu einer Rahmenkonstruktion 12 bzw. zu einer Bodenoberfläche oder einem Pflanzenbestand Steuern und/oder Regeln zu können. Die Höhenverstellung erfolgt mittels einer zwischen der Rahmenkonstruktion 12 und dem Träger 52 angeordneten Parallelogramm 60 und zumindest einem der Parallelogramm 60 zugeordnetem Stellglied 62, wobei das Stellglied 62 gemäß den Figuren ein hydraulisch oder pneumatisch betriebener Linearantrieb, insbesondere ein Zylinder, ist.

Erfindungsgemäß ist vorgesehen, dass eine mit dem Verteilgestänge 50 eine bauliche Einheit bildende Dosiervorrichtung 100 vorgesehen ist, mittels welcher Dosiervorrichtung 100 jeweils das Streugut in einer gewünschten Menge in eine Mehrzahl an, am Verteilgestänge 50 angebrachter Verteilleitung 150 dosiert werden kann. Die Verteilleitungen 150 erstrecken sich jeweils von der Dosiervorrichtung 100 aus in unterschiedlichen Längen entlang dem Verteilgestänge 50. Zudem weisen die Verteilleitungen 150 an dessen äußerem Ende ein Verteilelement 152 auf, wobei hierbei auch vorgesehen sein kann, dass an einer Verteilleitungen 150 zwei oder mehr Verteilelemente 152 angebracht sind, so dass bspw. ein Verteilelement 152 im Verlauf sowie ein weiteres Verteilelement 152 am äußeren Ende der Verteilleitung 150 angebracht ist.

Gemäß der Ausführungsbeispiele ist das Verteilelement 152 jeweils durch einen Prallteller 154 gebildet, gegen welchen Prallteller 154 das Streugut mittels eines Luftvolumenstroms gefördert wird und mittels welches Prallteller 154 anschließend das Streugut fächerförmig in Richtung einer Bodenoberfläche oder einem Pflanzenbestand verteilt wird (siehe Figur 1A und 2A).

Gemäß den Ausführungsbeispielen der Figuren 1C und 2C ist es zudem möglich, dass die mittels der Verteilelemente 152 erzeugten Streufächer in Bereichen, in denen keine Nutzpflanzen vorhanden sind und/oder in Bereichen der Fahrspur des Fahrwerks 16, die Streufächer jeweils derartig anpassbar sind, dass in diesen Bereichen kein Streugut ausgebracht wird. Dies kann bspw. mittels eines Verteilelements 152 erreicht werden, mittels welchem ein asymmetrischer Streufächer erzeugt wird. In einer Weiterbildung der Erfindung kann zudem vorgesehen sein, dass die mittels der Dosiervorrichtung 100 in die Verteilleitungen 150 mit derartigen Verteilelementen 152 zugeführte Menge an Streugut entsprechend verringert bzw. angepasst wird.

Die landwirtschaftliche Verteilmasche ist jeweils als pneumatisch arbeitender, Düngerstreuer ausgebildet, was bedeutet, dass das Streugut von der Dosiervorrichtung 100 entlang der Verteilleitungen 150 mittels eines Luftvolumenstroms in Richtung der Verteilelemente 152 gefördert wird. Um einen derartigen Luftvolumenstrom zu erzeugen sind die Verteilleitungen 150 mittels wenigstens einer Strömungserzeugungseinrichtung 200 verbunden. Wobei die Strömungserzeugungseinrichtung 200 insbesondere durch ein oder mehrere Gebläse gebildet ist. Die Strömungserzeugungseinrichtung 200 ist insbesondere derartig ausgeführt, dass mittels dieser in den Verteilleitungen 150 unterschiedliche Luftvolumenströme erzeugbar sind, insbesondere Luftvolumenströme mit verschiedenen Strömungsgeschwindigkeiten. Hierzu kann die Strömungserzeugungseinrichtung 200 mittels eines motorischen Antriebs mit verschiedenen Drehzahlen betreibbar sein.

Gemäß den Ausführungsbeispielen ist die Strömungserzeugungseinrichtung 200 jeweils dem Verteilgestänge 50 zugeordnet. Wie insbesondere aus den Figuren 1B und 2B sowie 4A und 4B ersichtlich ist, bildet die Strömungserzeugungseinrichtung 200 somit eine bauliche Einheit mit dem Verteilgestänge 50, wobei die Strömungserzeugungseinrichtung 200 hierfür an einer, mit dem Verteilgestänge 50 verbundenen Haltevorrichtung 64 angebaut, und somit fest verbunden ist.

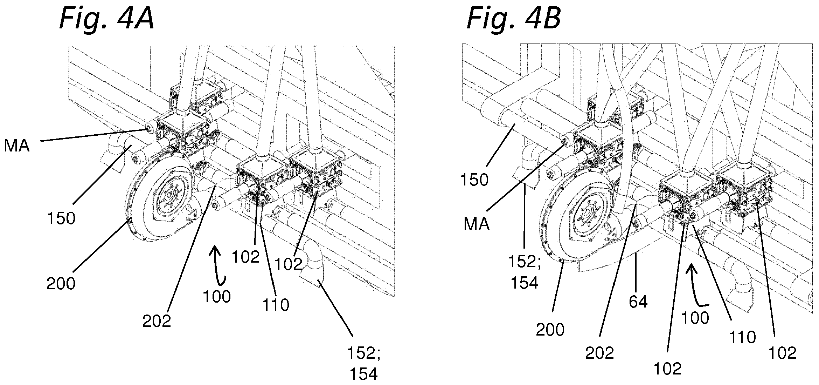

Um mittels einer Strömungserzeugungseinrichtung 200 mehrere Verteilleitungen 150 mit einem jeweiligen Luftvolumenstrom zu beaufschlagen, ist gemäß der Figuren 4A und 4B vorgesehen, dass der Strömungserzeugungseinrichtung 200 ein Luftstromteiler 202 zugeordnet ist. Der Luftstromteiler 202 mündet hierfür in der Strömungserzeugungseinrichtung 200 und weißt eine Mehrzahl, entsprechend der Anzahl an Verteilleitungen 150, von Anschlüssen auf. Der Luftstromteiler 202 bildet wiederum mit dem Verteilgestänge 50 eine bauliche Einheit.

Zur Erreichung einer verschleißoptimierten Verteilmaschine 10 sowie eines vereinfachten Aufbaus der Verteilmaschine 10 ist vorgesehen, dass die Versorgung der Dosiervorrichtung 100 mittels eines zwischen dem Vorratsbehälter 18 und dem Verteilgestänge 50 angeordneten Fördersystems 250 erfolgt. Gemäß den Ausführungsbeispielen der Figuren 1, 2 und 3, ist in Abhängigkeit der Anzahl an Streugüter jeweils ein Fördersystem 250 vorgesehen, wobei das Fördersystem 250 in den Figuren stark vereinfacht jeweils als eine Verbindung 252 in Form einer Rohrleitung abgebildet ist.

Das Fördersystem 250 ist zweckmäßig derartig ausgeführt, dass mittels diesem die geförderte Menge an Streugut variabel veränderbar, d.h. Steuer- und/oder Regelbar ist. Wobei die Variation des Streuguts insbesondere durch eine Variation, d.h. durch eine Steuerung und/oder Regelung eines Antriebssystems 254 des Fördersystems 250 erfolgen kann. Eine derartige Variation kann bspw. eine Erhöhung oder Verringerung einer Antriebsdrehzahl sein. Insbesondere ist die mittels des Fördersystems 250 geförderte Menge an Streugut in Abhängigkeit der mittels der Dosiervorrichtung 100 dosierten Menge an Streugut variierbar.

Das Fördersystem 250 gemäß den Ausführungsbeispielen setzt sich aus mehreren Abschnitten zusammen, welche Abschnitte zudem in einem Winkel α (vergl. Figur 2B) zueinander angeordnet sind. Wobei der Winkel α zudem veränderbar sein kann, insbesondere in Abhängigkeit einer Höhenlage des Verteilgestänges 50 veränderbar sein kann.

Das Fördersystem 250 wird gemäß der Figuren 1 und 2 durch Förderschnecken 256 gebildet. Alternativ zu einer Förderschnecke 256 wären bspw. auch ein Förderband und/oder mehrere Förderbandabschnitte denkbar, welche wiederum in einem Winkel α angeordnet sein können. Auch eine Kombination aus Förderschnecke 256 und Förderband wäre denkbar bzw. einsetzbar, welche wiederum in einem Winkel α zueinander angeordnet sein können.

Gemäß einer weiteren Ausführungsvariante wäre es zudem denkbar, dass das Fördersystem 250 als ein pneumatisches Fördersystem 250 ausgebildet ist, bei welchem das Streugut mittels eines, in einer zwischen dem Vorratsbehälter 18 und dem Verteilgestänge 50 und/oder der Dosiervorrichtung angeordneten Förderleitung vorhandenen Luftvolumenstroms vom Vorratsbehälter 18 zur Dosiervorrichtung 100 bzw. zur Verteileinheit 156 und/oder zum Behälter 158 gefördert wird, bei einer derartigen Ausführungsvariante könnte das Antriebssystem 254 durch ein Gebläse gebildet sein.

Das Fördersystem 250 verläuft jeweils zumindest Abschnittweise entlang der Außenkontur des Vorratsbehälters 18 bzw. entlang der Bodenfläche und einer Seitenwand.

Das Fördersystem 250 weist einen Einlass 258 auf, welcher Einlass 258 dem Auslass 258 des trichterförmigen Vorratsbehälter 18 bzw. der Kammer 20 des Vorratsbehälters 18 zugeordnet ist. Gemäß den Ausführungsbeispielen bildet das Fördersystem 250 somit den Boden bzw. den Auslass 258 des Vorratsbehälters 18 aus.

Wie aus den Figuren 1D und 1E sowie 2D und 2E ersichtlich ist, kann dem Einlass 258 eine in dessen Position veränderbare bzw. verschiebbare Abdeckung 260 zugeordnet sein, wobei durch eine entsprechende Veränderung der Position jeweils definierbar ist, welcher Bereich des Vorratsbehälters 18 zuerst bzw. zuletzt entleer werden soll.

Wie aus den Figuren 1, 2 und 6 ersichtlich ist, kann in einer Ausführungsform vorgesehen sein, dass das mittels des Fördersystems 250 geförderte Streugut in eine oder in Richtung zu einer Verteileinheit 156 gefördert wird. Mittels der Verteileinheit 156 wird das Streugut in eine Mehrzahl an Abgängen 160 aufgeteilt, von welchen Abgängen 160 das Streugut wiederum mittels Leitungen 162 (zur Vereinfachung nur einige dargestellt) zur Dosiervorrichtung 100 weitergeleitet werden kann. Zudem kann die Verteileinheit 156 wiederum mit einem Luftvolumenstrom beaufschlagt sein. Zudem bildet die Verteileinheit 156 gemäß den Ausführungsbeispielen wiederum eine bauliche Einheit mit dem Verteilgestänge 50.

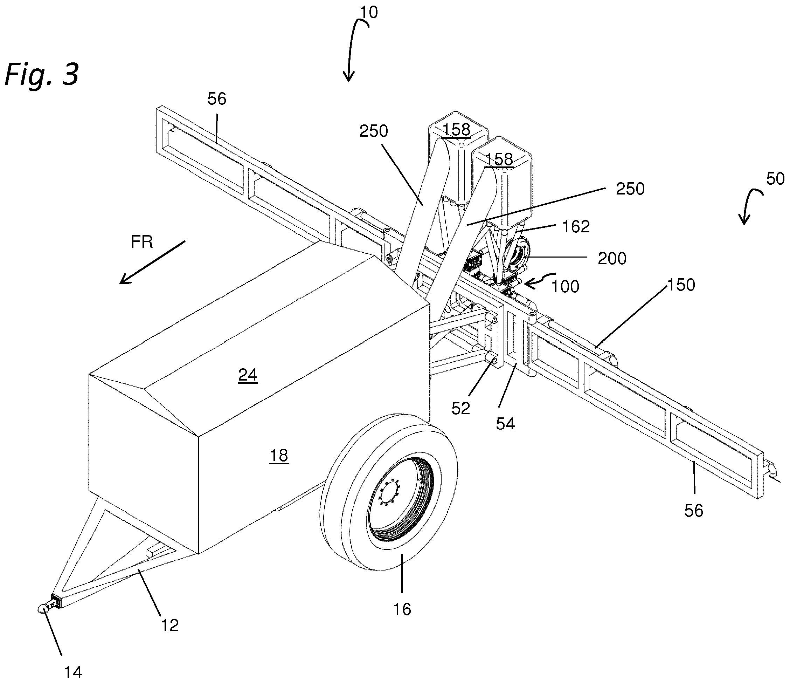

Wie aus der Figur 3 zudem ersichtlich ist, kann in einer weiteren Ausführungsform vorgesehen sein, dass das mittels des Fördersystems 250 geförderte Streugut in einen oder in Richtung zu einem, insbesondere mit dem Verteilgestänge 50 eine bauliche Einheit bildenden Behälter 158 gefördert wird, von welchem Behälter 158 das Streugut anschließend zu der Dosiervorrichtung 100 weiter geleitet wird.

Zudem entspricht die Anzahl an Verteileinheiten 156 bzw. Behälter 158 wiederum der Anzahl an Fördersystemen 250 und somit der Anzahl an verschiedenen Streugütern.

Die Dosiervorrichtung 100 und das Verteilgestänge 50 bilden eine derartige bauliche Einheit, dass die Bewegungen des Verteilgestänges 50 synchron und/oder zumindest weitgehend synchron von der Dosiervorrichtung 100 ausgeführt werden.

Weitere Details der Dosiervorrichtung 100 gehen aus den schematischen Perspektivansichten der Figuren 4A und 4B hervor, wobei gemäß der Figur 4A jede Dosiereinheit mit einer Leitung mit Streugut versorgbar ist, und wobei gemäß der Figur 4B jede Dosiereinheit mit zwei Leitungen mit Streugut versorgbar ist,

Die Dosiervorrichtung 100 umfasst mehrere Dosiereinheiten 102, wobei zudem vorgesehen ist, dass jeder Verteilleitung 150 eine Dosiereinheit 102 zugeordnet ist. Vorzugsweise erfolgt die Zuführung an Streugut mittels der Dosiereinheiten 102 zu den Verteilleitungen 150 mit variablen Mengen.

Die Dosiereinheiten 102 sind jeweils unabhängig voneinander betreibbar, d.h. jede Dosiereinheit 102 kann einen eigenen motorischen Antrieb MA aufweisen, mittels welchem wiederum die Drehzahlen der Dosiereinheiten 102 variabel veränderbar sein können. Ebenso können mittels des motorischen Antriebs MA die Dosiereinheiten 102 unabhängig voneinander aktiviert oder deaktiviert werden. Mittels der Dosiereinheiten 102 wird somit jeweils das Streugut in Verteilleitungen 150 dosiert und von einem zumindest in den Verteilleitungen 150 anliegenden Luftvolumenstrom in Richtung der Verteilelemente 152 gefördert.

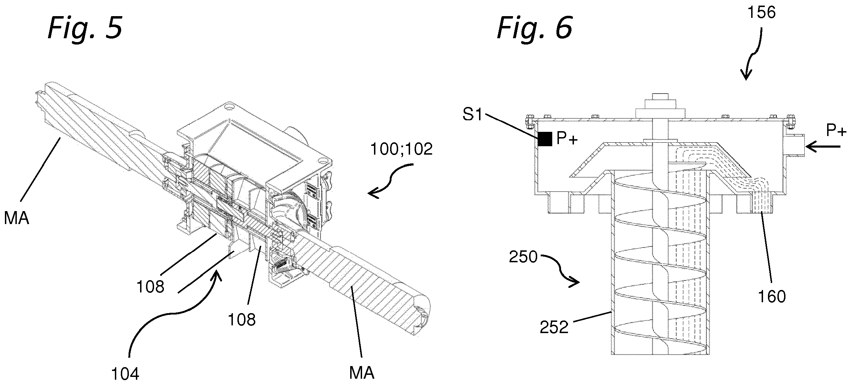

Weitere Details einer Ausführungsvariante einer Dosiereinheit 102 gehen aus der Schnittansicht der Figur 5 hervor. Die Dosiereinheit 102 ist hierbei als Zellenradschleuse 104 ausgebildet, d.h. in einem Gehäuse 106 ist ein mittels eines motorischen Antriebs MA drehbar angetriebener Rotor 108 angeordnet. Der Rotor 108 weist jeweils Öffnungen bzw. Aussparungen auf, welche im Betrieb mit Streugut gefüllt werden. In Abhängigkeit der Größe der Öffnungen und Aussparungen sowie in Abhängigkeit der Antriebsdrehzahl des Rotors 108 kann jeweils die mittels der Dosiereinheit 102 dosierte Menge an Streugut verändert werden, d.h. erhöht oder verringert werden.

Im Ausführungsbeispiel der Figur 5 sind zudem im Gehäuse 106 zwei Rotoren 108 angeordnet, d.h. es werden somit mittels eines Gehäuses 106 zwei Dosiereinheiten 102 gebildet. Wobei wiederum jedem Rotor 108 ein motorischer Antrieb MA zugeordnet ist. Der motorische Antrieb MA gemäß der Figur 5 ist ein Elektromotor. Es wären jedoch auch andere Ausführungsvarianten von motorischen Antrieben MA denkbar, bzw. verwendbar, bspw. auch hydraulisch betriebene Motoren.

Gemäß der Figuren 4 kann zur Verbindung 252 der Dosiervorrichtung 100 mit den Verteilleitungen 150 eine Fallschleuse 110 vorgesehen sein. Wobei jeweils vorgesehen sein kann, dass jedem Gehäuse 106 eine Fallschleuse 110 nachgeordnet ist, wobei wiederum die Anzahl an Anschlüssen der Fallschleuse 110 identisch und/oder unterschiedlich zur Anzahl von mit diesen verbundene Fallschleusen 110 sein kann. Darüber hinaus ist die Fallschleuse 110 mit dem Luftstromteiler 202 bzw. mit der Strömungserzeugungseinrichtung 200 verbunden.

Jede Verteilleitung 150 mit daran angeordnetem Verteilelement 152 kann darüber hinaus einer sog. Teilbreite entsprechen, so dass bspw. durch Aktivierung und/oder Deaktivierung der Dosiereinheit 102 auch Teilbreiten schaltbar sind. Jede Teilbreite kann bspw. einer Arbeitsbreite von 1,5 Meter oder mehr oder weniger entsprechen.

Gemäß der Figuren 4 ist zudem vorgesehen, dass in der Fallschleuse 110, Streugutdurchfluss beeinflussende Elemente angebracht sind, bspw. Klappen zum Verschließen oder zur Freigabe der Streugutdosierung mittels der Dosiereinheit 102 in die Fallschleuse 110 bzw. in die Verteilleitungen 150. Die Klappen können zudem manuell verstellbar sein und/oder mittels Stellelementen automatisiert bzw. motorisch verstellbar sein.

Zur Erreichung einer vereinfachten Steuer- und/oder Regelbarkeit der Drehlage und/oder Höhenlage des Verteilgestänges 50 kann vorgesehen sein, dass die mit dem Verteilgestänge 50 eine bauliche Einheit bildenden Komponenten, (d.h. die Dosiervorrichtung 100 und/oder die Strömungserzeugungseinrichtung 200 und/oder der Behälter 158 und/oder die Verteileinheit 156 und/oder der Luftstromteiler 202 und/oder die Fallschleuse 110) am Träger 52 angebracht sind und/oder dass diese am Mittelteil 54 des Verteilgestänges 50 angebracht sind. Insbesondere kann vorgesehen sein, dass die Komponenten derartig am Verteilgestänge 50 angebracht sind, dass dessen Schwerpunkt SP, sich zumindest annähernd in der Mitte, d.h. im Zentrum des Verteilgestänges 50 befindet und/oder dass sich der Schwerpunkt SP in einen Bereich befindet, welcher nur einen geringen Abstand zum Zentrum des Verteilgestänges 50 aufweist, bspw. maximal 25cm oder 50cm oder 100cm vom Zentrum entfernt ist (siehe gestrichelte Linien der Figuren 1D, 1E und 2D, 2E), wobei das Zentrum wiederum sich auf einer Parallel zur Fahrtrichtung orientierten Ebene befinden kann und wobei diese Ebene wiederum die Lagerung 58 schneiden kann.

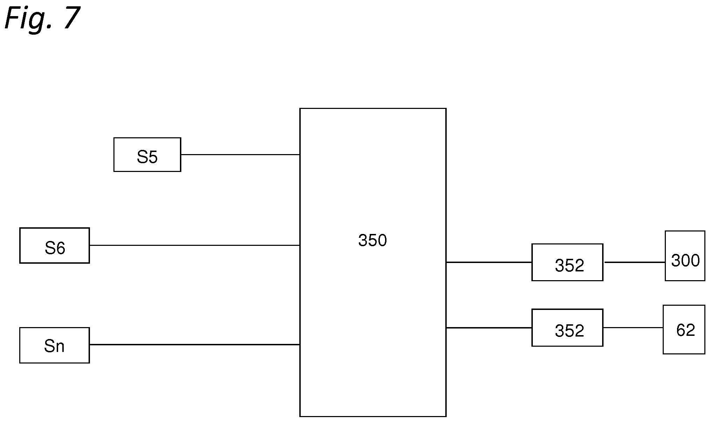

Weitere Details zur Steuerung- und/oder Regelung der Drehlage und/oder Höhenlage des Verteilgestänges 50 gehen aus dem Blockschaltbild der Figur 7 hervor. Dargestellt ist hierbei zunächst ein Steuerungs- und/oder Regelungssystem zur Variation der Drehlage und/oder der Höhenlage des Verteilgestänges, insbesondere ein Steuerungs- und/oder Regelungssystem einer Stelleinrichtung 300 und/oder eines Stellglieds 62.

Das Steuerungs- und/oder Regelungssystem umfasst zunächst eine Sensoranordnung S5 zur Ermittlung und/oder Auswertung einer Höhenlage (z.B. mittels Ultraschallsensoren oder Abstandsensoren oder dergl.) des Verteilgestänges 50, insbesondere in Bezug zu einer Rahmenkonstruktion 12 der Verteilmaschine 10 bzw. zu einer Bodenoberfläche oder einem Pflanzenbestand. Das Steuerungs- und/oder Regelungssystem umfasst zudem eine Sensoranordnung S6 zur Ermittlung und/oder Auswertung einer Drehlage des Verteilgestänges 50, in Bezug auf den Träger 52 und/oder eine Rahmenkonstruktion 12 der Verteilmaschine 10. Darüber hinaus wären noch weitere Sensoranordnungen Sn möglich bzw. denkbar. Bspw. wäre eine Sensoranordnung zur Ermittlung und/oder Auswertung der Bewegungen der Stelleinrichtung 300 und/oder des zumindest einen Stellglieds 62 denkbar.

Mittels einer Datenverarbeitungseinrichtung 350, insbesondere auf Basis eines in der Datenverarbeitungseinrichtung 350 hinterlegten Steuerungs- und/oder Regelungsprogramms werden anschließend aus den Ausgangssignalen der Sensoranordnungen S5; S6; Sn Steuerungs- und/oder Regelungssignale für die Stelleinrichtung 300 und/oder das zumindest eine Stellglied 62 zur automatisieren Steuerung und/oder Regelung des Verteilgestänge 50 generiert und/oder ausgegeben. Wobei zweckmäßig mittels der Datenverarbeitungseinrichtung 350 ein Ventil 352 ansteuerbar und/oder regelbar und/oder parametrisierbar ist, mittels welches Ventils 352 wiederum die Stelleinrichtung 300 und/oder die Stellglieder 62 steuerbar und/oder regelbar sind.

Weitere Details zur Steuerung- und/oder Regelung der Dosiervorrichtung 100 und/oder des Fördersystems 250 gehen aus dem Blockschaltbild der Figur 7 hervor. Je nach Ausführungsvariante der Verteilmaschine kann dem Behälter 158 oder der Verteileinheit 156 eine Sensoranordnung S2 zur Ermittlung und/oder Auswertung von dessen Füllstand zugeordnet sein, wobei der Füllstand an eine Datenverarbeitungseinrichtung 350 übertragen wird. Zudem ist der Dosiereinheit 102 wiederum eine Sensoranordnung S2 zur Ermittlung und/oder Auswertung der dosierten Menge an Streugut zugeordnet. Diese Werte sind auch wiederum an eine Datenverarbeitungseinrichtung übertragbar. Dabei wird eine Ermittlung und/oder Auswertung der dosierten Menge auch auf Basis des verwendeten Rotors und der Drehzahl mit dem der Rotor angetrieben, mittels der Datenverarbeitungseinrichtung 350 ermittelbar und/oder auswertbar sein kann.

Zudem ist es möglich, dass eine weitere Sensoranordnung S3 zur Ermittlung und/oder Auswertung der Streufächer vorgesehen ist, bzw. zur Überwachung der Verteilelemente 152. Mittels dieser Sensoranordnung S3 kann wiederum eine Auswertung der verteilten Menge an Streugut mittels der Datenverarbeitungseinrichtung 350 erfolgen.

In Abhängigkeit des somit erfassten Füllstands und/oder der ausgebrachten und/oder dosierten Menge an Streugut wird anschließend wiederum bspw. ein Ventil 352 oder dergl. mittels der Datenverarbeitungseinrichtung 350 angesteuert und somit eine Antriebssystem 254 des Fördersystems 250 aktiviert oder deaktiviert und/oder die mittels des Fördersystems 250 geförderte Menge an Streugut erhöht oder verringert.

Obwohl die Erfindung unter Bezugnahme auf bestimmte Ausführungsbeispiele beschrieben worden ist, ist es für einen Fachmann ersichtlich, dass verschiedene Änderungen ausgeführt werden können und Äquivalente als Ersatz verwendet werden können, ohne den Bereich der Erfindung zu verlassen. Zusätzlich können viele Modifikationen ausgeführt werden, ohne den zugehörigen Bereich zu verlassen. Folglich soll die Erfindung nicht auf die offenbarten Ausführungsbeispiele begrenzt sein, sondern soll alle Ausführungsbeispiele umfassen, die in den Bereich der beigefügten Patentansprüche fallen. Insbesondere beansprucht die Erfindung auch Schutz für den Gegenstand und die Merkmale der Unteransprüche unabhängig von den in Bezug genommenen Ansprüchen.

### Bezugszeichenliste

- 10: Verteilmaschine
- 12: Rahmenkonstruktion
- 14: Verbindungseinrichtung
- 16: Fahrwerk
- 18: Vorratsbehälter
- 20: Kammer
- 22: Zwischenblech
- 24: Deckelelement

- 50: Verteilgestänge
- 52: Träger
- 54: Mittelteil
- 56: Seitenausleger
- 58: Lagerung
- 60: Parallelogramm
- 62: Stellglied
- 64: Haltevorrichtung (Halter Gebläse)

- 100: Dosiervorrichtung
- 102: Dosiereinheit
- 104: Zellenradschleuse
- 106: Gehäuse
- 108: Rotor
- 110: Fallschleuse

- 150: Verteilleitung
- 152: Verteilelement
- 154: Prallteller
- 156: Verteileinheit
- 158: Behälter
- 160: Abgang
- 162: Leitung
- 200: Strömungserzeugungseinrichtung
- 202: Luftstromteiler

- 250: Fördersystem
- 252: Verbindung (Rohr des Fördersystems)
- 254: Antriebssystem
- 256: Förderschnecke
- 258: Einlass; Auslass
- 260: Abdeckung

- 300: Stelleinrichtung

- 350: Datenverarbeitungseinrichtung
- 352: Ventil

- FR: Fahrtrichtung, Vorwärtsrichtung
- MA: Motorischer Antrieb

- α: Winkel α

- SP: Schwerpunkt

- S1: Sensoranordnung Ermittlung und/oder Auswertung Füllstand Behälter/ Verteileinheit
- S2: Sensoranordnung Ermittlung und/oder Auswertung Dosiermenge
- S3: Sensoranordnung Ermittlung und/oder Auswertung Streufächer
- S5: Sensoranordnung Ermittlung und/oder Auswertung Höhenlage
- S6: Sensoranordnung Ermittlung und/oder Auswertung Drehlage
- S7: ergänzende Sensoranordnung

## Patentansprüche

1. Verteilmaschine (10), insbesondere pneumatischer Düngerstreuer, zum Ausbringen von körnigem landwirtschaftlichem Streugut,
mit einer, die Baugruppen der Verteilmaschine (10) tragenden, Rahmenkonstruktion (12), einem Vorratsbehälter (18), zum Mitführen und/oder Bereitstellen des Streuguts, sowie einem sich quer zur Fahrtrichtung (FR) erstreckenden Verteilgestänge (50), welches Verteilgestänge (50) einen Träger (52), ein Mittelteil (54) und schwenkbar am Mittelteil (54) angebrachte Seitenausleger (56) aufweist, wobei am Verteilgestänge (50) Verteilleitungen (150) mit Verteilelementen (152) angebracht sind und wobei zur Förderung des Streuguts zu den Verteilelementen (152), die Verteilleitungen (150) mit einem Luftvolumenstrom beaufschlagbar sind, wobei mittels zumindest einer, mit dem Verteilgestänge (50) eine bauliche Einheit bildenden und mit dem Vorratsbehälter (18) wirkverbundenen, Dosiervorrichtung (100), Streugut in die Verteilleitungen (150) dosierbar ist,
**dadurch gekennzeichnet, dass** die Beaufschlagung der Verteilleitungen (150) mit einem Luftvolumenstrom mittels einer, mit variablen Drehzahlen betreibbaren Strömungserzeugungseinrichtung (200) erfolgt, wobei der Strömungserzeugungseinrichtung (200) ein Luftstromteiler (202) zugeordnet ist, mittels welchem der mittels der Strömungserzeugungseinrichtung (200) erzeugte Luftvolumenstrom in eine Mehrzahl von Luftvolumenströmen aufgeteilt wird.

2. Verteilmaschine nach Anspruch 1, **dadurch gekennzeichnet, dass** das Verteilgestänge (50) mittels einer Lagerung (58) quer zur Fahrtrichtung (FR) drehbar am Träger (52) angebracht ist und dass eine Drehlage des Verteilgestänges (50) steuer- und/oder regelbar ist.

3. Verteilmaschine nach Anspruch 1 oder 2, **dadurch gekennzeichnet, dass** eine Höhenlage des Verteilgestänges (50) steuer- und/oder regelbar ist.

4. Verteilmaschine nach Anspruch 3, **dadurch gekennzeichnet, dass** zur Steuerung und/oder Regelung der Höhenlage, das Verteilgestänge (50) mittels eines Parallelogramms (60) und/oder einer Lineareinheit an der Rahmenkonstruktion (12) angebracht ist.

5. Verteilmaschine nach einem der vorhergehenden Ansprüche, **dadurch gekennzeichnet, dass** das Verteilgestänge (50), insbesondere dessen Mittelteil (54) und/oder dessen Seitenausleger (56) durch ein Fachwerk gebildet sind, wobei das Fachwerk eine größere Höhe als Tiefe aufweist.

6. Verteilmaschine nach einem der vorhergehenden Ansprüche, **dadurch gekennzeichnet, dass** die Dosiervorrichtung (100) eine derartige bauliche Einheit mit dem Verteilgestänge (50) bildet, dass Bewegungen des Verteilgestänges (50) synchron und/oder zumindest weitgehend synchron von der Dosiervorrichtung (100) ausgeführt werden und/oder synchron und/oder zumindest weitgehend synchron auf die Dosiervorrichtung (100) übertragen werden.

7. Verteilmaschine nach einem der vorhergehenden Ansprüche, **dadurch gekennzeichnet, dass** die Dosiervorrichtung (100) durch eine oder mehrere Dosiereinheiten (102) gebildet wird.

8. Verteilmaschine nach Anspruch 7, **dadurch gekennzeichnet, dass** die Dosiereinheit (102) eine Zellenradschleuse ist, welche zur Veränderung der dosierten Menge an Streugut mit unterschiedlichen Rotoren (108) bestückt werden kann und/oder mit unterschiedlichen Drehzahlen antreibbar sein kann.

9. Verteilmaschine nach einem der vorhergehenden Ansprüche, **dadurch gekennzeichnet, dass** mittels einer Dosiereinheit (102) einer oder zwei oder mehr Verteilleitungen (150) Streugut zuführbar ist.

10. Verteilmaschine nach einem der vorhergehenden Ansprüche, **dadurch gekennzeichnet, dass** die Wirkverbindung der Dosiervorrichtung (100) und des Vorratsbehälters (18) durch ein Fördersystem (250) zur Förderung von Streugut ausgebildet ist.

11. Verteilmaschine nach Anspruch 10, **dadurch gekennzeichnet, dass** die mittels des Fördersystems (250) geförderte Menge an Streugut in Abhängigkeit der mittels der Dosiervorrichtung (100) dosierten Menge an Streugut steuer- und/oder regelbar ist.

12. Verteilmaschine nach Anspruch 10 oder 11, **dadurch gekennzeichnet, dass** mittels des Fördersystems (250) das Streugut in einen mit dem Verteilgestänge (50) eine bauliche Einheit bildenden und mit der Dosiervorrichtung (100) wirkverbundenen Behälter (158) und/oder in eine mit dem Verteilgestänge (50) eine bauliche Einheit bildende und mit der Dosiervorrichtung (50) wirkverbundenen Verteileinheit (156), förderbar ist.

13. Verteilmaschine nach Anspruch 1, **dadurch gekennzeichnet, dass** die Strömungserzeugungseinrichtung (200) und das Verteilgestänge (50) eine bauliche Einheit bilden.

14. Verteilmaschine nach einem der vorhergehenden Ansprüche, **dadurch gekennzeichnet, dass** der Dosiervorrichtung (50) und/oder der Dosiereinheit (102) eine Fallschleuse (110) nachgeordnet ist, wobei die Fallschleuse (110) zumindest einen Anschluss für eine Strömungserzeugungseinrichtung (200) und einen oder mehrere Anschlüsse für eine oder mehrere Verteilleitungen (150) aufweist.

15. Verteilmaschine nach Anspruch 14, **dadurch gekennzeichnet, dass** der Fallschleuse (110) den Streugutdurchfluss beeinflussende Elemente zugeordnet sind, welche Streugutdurchfluss beeinflussende Elemente manuell und/oder mittels Stellelementen automatisiert und/oder motorisch verstellbar sind.

16. Verteilmaschine nach einem der vorhergehenden Ansprüche, **dadurch gekennzeichnet, dass** die mit dem Verteilgestänge (50) eine bauliche Einheit bildenden Komponenten derartig am Verteilgestänge (50) angebracht sind, dass dessen Schwerpunkt (SP), sich zumindest annähernd in der Mitte, insbesondere im Zentrum des Verteilgestänges (50) befindet und/oder dass sich der Schwerpunkt (SP) in einen Bereich befindet welcher nur einen geringen Abstand zum Zentrum des Verteilgestänges (50) aufweist, insbesondere jedoch maximal 25cm oder 50cm oder 100cm vom Zentrum entfernt ist, wobei das Zentrum sich auf einer Parallel zur Fahrtrichtung (FR) orientierten Ebene befindet, welche Ebene die Lagerung (58) schneidet.

17. Verteilmaschine nach einem der vorhergehenden Ansprüche, **dadurch gekennzeichnet, dass** mittels der Verteilelemente (152) verschiedene Streufächer erzeugbar sind, wobei am Verteilgestänge (50) eine Sensoranordnung (S3) zur Ermittlung und/oder Auswertung der Streufächer angebracht ist und wobei eine Variation der Ausbringmenge und/oder des mittels der Strömungserzeugungseinrichtung (200) erzeugten Luftvolumenstroms auf Basis der mittels der Sensoranordnung (S3) zur Ermittlung und/oder Auswertung der Streufächer erfassten Streufächer erfolgt.

18. Verteilmaschine nach einem der vorhergehenden Ansprüche, **dadurch gekennzeichnet, dass** der Vorratsbehälter (18) eine oder mehrere Kammern (20) aufweist, wobei die mehreren Kammern (20) gleiche oder unterschiedliche Volumen aufweisen.

19. Verteilmaschine (10) nach Anspruch 18, **dadurch gekennzeichnet, dass** der Vorratsbehälter (18) und/oder zumindest eine Kammer (20) druckdicht ausgebildet ist und mit einem Überdruck beaufschlagbar ist.

20. Verfahren zur Verteilung von körnigem landwirtschaftlichen Streugut, vorzugsweise ausgeführt mittels eines pneumatischen Düngersteuers, **gekennzeichnet durch**,
- Mitführung und/oder Bereitstellung des körnigen Streuguts mittels eines Vorratsbehälters (18),
- eine Förderung des Streuguts mittels eines Fördersystems (250), vom Vorratsbehälter (18) zu einer, mit einem sicher quer zu einer Fahrtrichtung (FR) ersteckenden Verteilgestänge (50) eine bauliche Einheit bildenden, Dosiervorrichtung (100),
- Dosierung von Streugut in eine Mehrzahl an, am Verteilgestänge (50) angebrachten Verteilleitungen (150), mittels der Dosiervorrichtung (100),
- Förderung des Streuguts entlang der Verteilleitungen (150) durch Beaufschlagung der Verteilleitungen (150) mit einem, mittels einer mit variablen Drehzahlen betreibbaren Strömungserzeugungseinrichtung (200), erzeugbaren Luftvolumenstrom, welcher Strömungserzeugungseinrichtung (200) ein Luftstromteiler (202) zugeordnet ist, mittels welchem der erzeugte Luftvolumenstrom in eine Mehrzahl von Luftvolumenströmen aufgeteilt wird,
- Verteilung des Streuguts durch Erzeugung von Streufächern mittels den Verteilleitungen (150) zugeordneten Verteilelementen (152).

21. Verfahren nach Anspruch 20, **gekennzeichnet durch** eine Schwenkbarkeit des Verteilgestänges (50) quer zur Fahrtrichtung (FR) mittels einer Lagerung (58), sowie durch eine Steuer- und/oder Regelbarkeit der Drehlage auf Basis von mittels einer Sensoranordnung (S6) zur Ermittlung und/oder Auswertung einer Drehlage erfassten Drehlage, wobei die Steuer- und/oder Regelung der Drehlage mittels einer Stelleinrichtung (300) erfolgt.

22. Verfahren nach Anspruch 20 oder 21, **gekennzeichnet durch**, eine Steuer- und/oder Regelbarkeit einer Höhenlage des Verteilgestänges (50) in Abhängigkeit einer, mittels einer Sensoranordnung (S5) zur Ermittlung und/oder Auswertung einer Höhenlage, erfassten Höhenlage des Verteilgestänges (50).

## Claims

1. A distribution machine (10), in particular a pneumatic fertiliser spreader, for spreading granular agricultural spreading material,
with a frame structure (12) carrying the components of the distribution machine (10), a storage hopper (18) for carrying along and/or supplying the spreading material, as well as with a distribution boom (50) extending transverse to a driving direction (FR), which distribution boom (50) has a carrier (52), a central part (54), and side booms (56) swivelably arranged on the central part (54), wherein distribution tubes (150) with distribution elements (152) are arranged on the distribution boom (50), and wherein the distribution tubes (150) are suppliable with an air volume flow for conveying the spreading material to the distribution elements (152), wherein spreading material is meterable into the distribution tubes (150) by means of at least one metering device (100), which forms a constructional unit with the distribution boom (50) and is operatively connected to the storage hopper (18),
**characterised in that** the supply of the distribution tubes (150) with an air volume flow is carried out by means of a flow generation device (200) that is operable at variable rotational speeds, wherein the flow generation device (200) is assigned an air flow divider (202) by means of which the air volume flow generated by the flow generation device (200) is divided into a plurality of air volume flows.

2. The distribution machine according to claim 1, **characterised in that** the distribution boom (50) is arranged on the carrier (52) by means of a bearing (58) so as to be rotatable transversely to a driving direction (FR), and **in that** a rotational position of the distribution boom (50) is controllable and/or adjustable.

3. The distribution machine according to claim 1 or 2, **characterised in that** a height position of the distribution boom (50) is controllable and/or adjustable.

4. The distribution machine according to claim 3, **characterised in that** the distribution boom (50) is arranged on the frame structure (12) by means of a parallelogram linkage (60) and/or of a linear unit for the control and/or adjustment of the height position.

5. The distribution machine according to one of the previous claims, **characterised in that** the distribution boom (50), in particular its central part (54) and/or its side booms (56), are formed by a truss structure, wherein the truss structure has a greater height than depth.

6. The distribution machine according to one of the previous claims, **characterised in that** the metering device (100) forms such a constructional unit with the distribution boom (50) that movements of the distribution boom (50) are carried out synchronously and/or at least largely synchronously by the metering device (100) and/or are transmitted synchronously and/or at least largely synchronously to the metering device (100).

7. The distribution machine according to one of the previous claims, **characterised in that** the metering device (100) is formed by one or more metering units (102).

8. The distribution machine according to claim 7, **characterised in that** the metering unit (102) is a rotary valve, which can be equipped with different rotors (108) in order to change the metered quantity of spreading material and/or which can be drivable at different rotational speeds.

9. The distribution machine according to one of the previous claims, **characterised in that** spreading material is suppliable to one or two or more distribution tubes (150) by means of a metering unit (102).

10. The distribution machine according to one of the previous claims, **characterised in that** the operative connection of the metering device (100) and the storage hopper (18) is formed by a conveying system (250) for conveying spreading material.

11. The distribution machine according to claim 10, **characterised in that** the quantity of spreading material conveyed by means of the conveying system (250) is controllable and/or adjustable based on the quantity of spreading material metered by means of the metering device (100).

12. The distribution machine according to claim 10 or 11, **characterised in that** the spreading material is conveyable by means of the conveyor system (250) into a container (158), which forms a constructional unit with the distribution boom (50) and is operatively connected to the metering device (100), and/or into a distribution unit (156), which forms a constructional unit with the distribution boom (50) and is operatively connected to the metering device (100).

13. The distribution machine according to claim 1, **characterised in that** the flow generation device (200) and the distribution boom (50) form a constructional unit.

14. The distribution machine according to one of the previous claims, **characterised in that** a drop valve (110) is arranged downstream of the metering device (50) and/or of the metering unit (102), wherein the drop valve (110) has at least one connection for a flow generation device (200) and one or more connections for one or more distribution tubes (150).

15. The distribution machine according to claim 14, **characterised in that** elements influencing the flow rate of the spreading material are assigned to the drop valve (110), which elements influencing the flow rate of the spreading material are manually and/or automatedly and/or motor-adjustable by means of adjustment elements.

16. The distribution machine according to one of the previous claims, **characterised in that** the components forming a constructional unit with the distribution boom (50) are arranged on the distribution boom (50) in such a manner that the centre of gravity (SP) thereof is at least approximately in the middle, in particular, in the centre of the distribution boom (50), and/or that the centre of gravity (SP) is in an area which is only at a small distance from the centre of the distribution boom (50), in particular however, only a maximum of 25 cm or 50 cm or 100 cm away from the centre, wherein the centre is on a plane oriented parallel to the driving direction (FR) and intersecting the bearing (58).

17. The distribution machine according to one of the previous claims, **characterised in that** different spread fans are generatable by means of the distribution elements (152), wherein a sensor arrangement (S3) for the determination and/or evaluation of the spread fans is arranged on the distribution boom (50), and wherein a variation of the spreading quantity and/or of the air volume flow generated by means of the flow generation device (200) is carried out based on the spread fans detected by means of the sensor arrangement (S3) for the determination and/or evaluation of the spread fans.

18. The distribution machine according to one of the previous claims, **characterised in that** the storage hopper (18) has one or more chambers (20), wherein the plurality of chambers (20) have the same or different volumes.

19. The distribution machine (10) according to claim 18, **characterised in that** the storage hopper (18) and/or at least one chamber (20) is designed to be pressure-tight and is chargeable with an overpressure.

20. A method for the distribution of granular agricultural spreading material, preferably carried out by means of a pneumatic fertiliser spreader, the method **characterised by**
- carrying along and/or supplying of the the granular spreading material by means of a storage hopper (18),
- a conveyance of the spreading material by means of a conveying system (250) from the storage hopper (18) to a metering device (100), which forms a constructional unit with a distribution boom (50) extending transversely to a driving direction (FR),
- metering of spreading material by means of the metering device (100) into a plurality of distribution tubes (150) arranged on the distribution boom (50),
- conveyance of the spreading material along the distribution tubes (150) by supply of the distribution tubes (15) with an air volume flow that is generatable by means of a flow generation device (200), which is operable at variable rotational speeds, which flow generation device (200) is assigned an air flow divider (202), by means of which the generated air volume flow is divided into a plurality of air volume flows,
- distribution of the spreading material by generating of spreading fans by means of distribution elements (152) assigned to the distribution tubes (150).

21. The method according to claim 20, **characterised by** a swivelability of the distribution boom (50) transverse to the driving direction (FR) by means of a bearing (58), as well as by a controllability and/or adjustability of the rotational position based on a rotational position detected by means of a sensor arrangement (S6) for the determination and/or evaluation of a rotational position, wherein the control and/or adjustment of the rotational position is carried out by means of an adjustment device (300).

22. The method according to claim 20 or 21, **characterised by** a controllability and/or adjustability of a height position of the distribution boom (50) based on a height position of the distribution boom (50) detected by means of a sensor arrangement (S5) for the determination and/or evaluation of a height position.

## Revendications

1. Machine d'épandage (10), en particulier épandeur pneumatique d'engrais, pour épandre du produit agricole granuleux à épandre,
avec une structure de cadre (12) supportant les ensembles de la machine d'épandage (10), un réservoir (18) pour transporter et/ou fournir le produit à épandre, ainsi qu'une tringlerie de distrubtion (50) qui s'étend transversalement à la direction de déplacement (FR), laquelle tringlerie de distibtution (50) comprend un support (52), une partie médiane (54) et des bras latéraux (56) fixés à pivotement à la partie médiane (54), dans laquelle des conduites de distrubtion (150) avec des éléments de distribution (152) sont fixées à la tringlerie de distribution (50), et dans laquelle, pour transporter le produit à épandre jusqu'aux éléments de distribution (152), les conduites de distribution (150) peuvent être alimentées en un débit volumique d'air, dans laquelle du produit à épandre peut être dosé dans les conduites de distribution (150) au moyen d'au moins un dispositif de dosage (100) qui forme une unité constructive avec la tringlerie de distribution (50) et est en liaison active avec le réservoir (18),
**caractérisée par le fait que** les conduites de distribution (150) sont alimentées en un débit volumique d'air au moyen d'un dispositif générateur de courant (200) que l'on peut faire fonctionner à des vitesses variables, dans laquelle audit dispositif générateur de courant (200) est associé un diviseur de courant d'air (202) au moyen duquel le débit volumique d'air généré par le dispositif générateur de courant (200) est divisé en une pluralité de débits volumiques d'air.

2. Machine d'épandage selon la revendication 1, **caractérisée par le fait que** la tringlerie de distribution (50) est fixée à rotation au support (52) au moyen d'un palier (58) transversalement à la direction de déplacement (FR) et qu'une position de rotation de la tringlerie de distribution (50) peut être commandée et/ou réglée.

3. Machine d'épandage selon la revendication 1 ou 2, **caractérisée par le fait qu'**une position en hauteur de la tringlerie de distribution (50) peut être commandée et/ou régulée.

4. Machine d'épandage selon la revendication 3, **caractérisée par le fait que**, pour commander et/ou régler la position en hauteur, la tringlerie de distribution (50) est fixée à la structure de cadre (12) au moyen d'un parallélogramme (60) et/ou d'une unité linéaire.

5. Machine d'épandage selon l'une quelconque des revendications précédentes, **caractérisée par le fait que** la tringlerie de distribution (50), en partiuculier sa partie médiane (54) et/ou ses bras latéraux (56) sont formés par un treillis, dans laquelle ledit treillis est plus haut que profond.

6. Machine d'épandage selon l'une quelconque des revendications précédentes, **caractérisée par le fait que** le dispositif de dosage (100) forme avec la tringlerie de distribution (50) une unité constructive telle que des mouvements de la tringlerie de distribution (50) sont exécutés de manière synchrone et/ou au moins dans une large mesure de manière synchrone par le dispositif de dosage (100) et/ou sont transmis de manière synchrone et/ou au moins dans une large mesure de manière synchrone au dispositif de dosage (100).

7. Machine d'épandage selon l'une quelconque des revendications précédentes, **caractérisée par le fait que** le dispositif de dosage (100) est formé par une ou plusieurs unités de dosage (102).

8. Machine d'épandage selon la revendication 7, **caractérisée par le fait que** l'unité de dosage (102) est un sas à roue cellulaire qui peut être équipé de différents rotors (108) pour modifier la quantité dosée de produit à épandre et/ou peut être entraîné à différentes vitesses

9. Machine d'épandage selon l'une quelconque des revendications précédentes, **caractérisée par le fait que** du produit à épandre peut être amené au moyen d'une unité de dosage (102) à une ou deux ou plusieurs conduites de distribution (150).

10. Machine d'épandage selon l'une quelconque des revendications précédentes, **caractérisée par le fait que** la liaison active du dispositif de dosage (100) et du réservoir (18) est réalisée par un système de convoyage (250) pour transporter du produit à épandre.

11. Machine d'épandage selon la revendication 10, **caractérisée par le fait que** la quantité de produit à épandre transportée au moyen du système de convoyage (250) peut être commandée et/ou réglée en fonction de la quantité de produit à épandre dosée au moyen du dispositif de dosage (100).

12. Machine d'épandage selon la revendication 10 ou 11, **caractérisée par le fait qu'**au moyen du système de convoyage (250) le produit à épandre peut être transporté dans un récipient (158) qui forme une unité constructive avec la tringlerie de distribution (50) et est en liaison active avec le dispositif de dosage (100) et/ou dans une unité de distribution (156) qui forme une unité constructive avec la tringlerie de distribution (50) et est en liaison active avec le dispositif de dosage (100).

13. Machine d'épandage selon la revendication 1, **caractérisée par le fait que** le dispositif générateur de courant (200) et la tringlerie de distribution (50) forment une unité constructive.

14. Machine d'épandage selon l'une quelconque des revendications précédentes, **caractérisée par le fait qu'**au dispositif de dosage (50) et/ou à l'unité de dosage (102) est associé un sas à chute (110), dans laquelle le sas à chute (110) comprend au moins un raccord pour un dispositif générateur de courant (200) et un ou plusieurs raccord(s) pour une ou plusieurs conduites de distribution (150).

15. Machine d'épandage selon la revendication 14, **caractérisée par le fait qu'**au sas à chute (110) sont associés des éléments influençant le débit de produit à épandre, lesquels éléments influençant le débit de produit à épandre peuvent être réglés de manière manuelle et/ou automatisée et/ou par moteur au moyen d'éléments de réglage.

16. Machine d'épandage selon l'une quelconque des revendications précédentes, **caractérisée par le fait que** les composants formant une unité constructive avec la tringlerie de distribution (50) sont fixés à la tringlerie de distribution (50) de telle sorte que son centre de gravité (SP) se trouve au moins approximativement au milieu, en particulier au centre de la tringlerie de distribution (50) et/ou que le centre de gravité (SP) se trouve dans une zone qui ne présente qu'une faible distance du centre de la tringlerie de distribution (50), mais en particulier se trouve à une distance maximale de 25 cm ou de 50 cm ou de 100 cm du centre, dans laquelle le centre est situé sur un plan orienté parallèlement à la direction de déplacement (FR), lequel plan coupe le palier (58).

17. Machine d'épandage selon l'une quelconque des revendications précédentes, **caractérisée par le fait que** différents éventails d'épandage peuvent être générés au moyen des éléments de distribution (152), dans laquelle un ensemble de capteurs (S3) destiné à déterminer et/ou à évaluer lesdits éventails d'épandage est fixé à la tringlerie de distribution (50), et dans laquelle une variation de la quantité d'épandage et/ou du débit volumique d'air généré par le dispositif générateur de courant (200) se fait sur la base des éventails d'épandage détectés au moyen de l'ensemble de capteurs (S3) destiné à déterminer et/ou à évaluer les éventails d'épandage.

18. Machine d'épandage selon l'une quelconque des revendications précédentes, **caractérisée par le fait que** le réservoir (18) comprend une ou plusieurs chambres (20), dans laquelle la pluralité de chambres (20) présente des volumes identiques ou différents.

19. Machine d'épandage (10) selon la revendication 18, **caractérisée par le fait que** le réservoir (18) et/ou au moins une chambre (20) est conçu(e) de manière à être étanche à la pression et peut être mis(e) en surpression.

20. Procédé d'épandage de produit agriclle granuleux à épandre, réalisé de préférence au moyen d'un épandeur pneumatique d'engrais, **caractérisé par**
- transporter et/ou fournir le produit granuleux à épandre au moyen d'un réservoir (18),
- un convoyage du produit à épandre au moyen d'un système de convoyage (250) depuis le réservoir (18) jusqu'à un dispositif de dosage (100) qui forme une unité constructive avec une tringlerie de distribution (50) s'étendant transversalement à une direction de déplacement (FR),
- doser du produit à épandre dans une pluralité de conduites de distribution (150) fixées à la tringlerie de distribution (50), au moyen du dispositif de dosage (100),
- transporter le produit à épandre le long des conduites de distribution (150) en alimentant lesdites conduites de distribution (150) en un débit volumique d'air qui peut être généré au moyen d'un dispositif générateur de courant (200) que l'on peut faire fonctionner à des vitesses variables, auquel dispositif générateur de courant (200) est associé un diviseur de courant d'air (202) au moyen duquel le débit volumique d'air généré est divisé en une pluralité de débits volumiques d'air,
- distribuer le produit à épandre en générant des éventails d'épandage au moyen d'éléments de distribution (152) associés aux conduites de distribution (150).

21. Procédé selon la revendication 20, **caractérisé par** une aptitude de pivotement de la tringlerie de distribution (50) transversalement à la direction de déplacement (FR) au moyen d'un palier (58), ainsi que par une commandabilité et/ou une réglabilité de la position de rotation sur la base d'une position de rotation détectée au moyen d'un ensemble de capteurs (S6) destiné à déterminer et/ou à évaluer une position de rotation, dans lequel la commande et/ou le réglage de la position de rotation se fait au moyen d'un dispositif de réglage (300).

22. Procédé selon la revendication 20 ou 21, **caractérisé par** une commandabilité et/ou une réglabilité d'une position en hauteur de la tringlerie de distribution (50) en fonction d'une position en hauteur de la tringlerie de distribution (50) détectée au moyen d'un ensemble de capteurs (S5) destiné à déterminer et/ou à évaluer une position en hauteur.
